# EUROPEAN PATENT APPLICATION

(11) **EP 4 604 610 A1**
(43) Date of publication of application: **20.08.2025**
(21) Application number: 23871024.8
(22) Date of filing: 28.09.2023
(51) Int. Cl.: H04W 28/06, H04W 72/512

(54) **METHOD AND APPARATUS USED IN COMMUNICATION NODE FOR WIRELESS COMMUNICATION**

(30) Priority: 30.09.2022 CN 202211218296
(71) Applicant: SHANGHAI LANGBO COMMUNICATION TECHNOLOGY COMPANY LIMITED, Shanghai 200240 (CN)
(72) Inventor: YU, Qiaoling, Shanghai 201206 (CN); ZHANG, Xiaobo, Shanghai 201206 (CN)
(74) Representative: Gunzelmann, Rainer
(86) International application number: PCT/CN2023/122539
(87) International publication number: WO 2024/067799

(57) **Abstract**

Disclosed in the present application are a method and apparatus used in a communication node for wireless communication. A communication node operates a first MAC PDU on a first cell, wherein the operation is reception, or the operation is transmission; the first MAC PDU comprises a first MAC subPDU, the first MAC subPDU comprises a first MAC subheader and a first MAC SDU; the first MAC SDU comprises at least some bits of a first PDU and at least some bits of a second PDU; the first PDU and the second PDU belong to the same protocol layer, or the first PDU and the second PDU belong to different radio bearers. The technical solution of the present application can improve transmission performance.

## Description

### Technical Field

The present application relates to a transmission method and apparatus in a wireless communication system, in particular to a large-latency transmission method and apparatus.

### Background Art

In the future, the application scenarios of a wireless communication system will become more and more diversified, and different application scenarios impose different performance requirements for the system. In order to meet the different performance requirements of various application scenarios, a series of WIs (Work Items) of New Radio (NR) was approved at the 91st plenary meeting of the 3GPP (3rd Generation Partner Project) RAN (Radio Access Network), and the standardization work on NR was initiated. The non-terrestrial network (NTN), XR (eXtended Reality), and sidelink (SL) relay multi-path transmission is an important research direction.

### Summary of the Invention

In the existing protocol, a PDCP (Packet Data Convergence Protocol) data packet of one radio bearer (RB) is delivered by one PDCP entity to an RLC (Radio Link Control) entity associated with the radio bearer, and a PDU (Protocol Data Unit) of each Layer 2 (L2) sublayer above an MAC (Medium Access Control) sublayer only comprises a data packet of one radio bearer, and one MAC SDU (Service Data Unit) only comprises one PDU of one protocol layer. Faced with increasingly complex communication scenarios, reusing existing protocols will face the problem of large transmission latency or low transmission rates. Therefore, how to shorten the transmission latency or how to increase the transmission rate needs to be enhanced.

In response to the above problems, the present application provides a solution for data transmission. In the description of the above problems, an NR system is used as an example. The present application is also applicable to scenarios such as an LTE (Long-Term Evolution) system. Further, although the present application provides a specific implementation for a user plane, the present application can also be used in scenarios such as a control plane to achieve similar technical effects as those of the user plane. Further, although the original intention of the present application is for a Uu air interface, the present application can also be used for a PC5 interface. Further, although the original intention of the present application is for scenarios between terminals and base stations, the present application is also applicable to a V2X (Vehicle-to-Everything) scenario, and communication scenarios between terminals and relays and between relays and base stations to achieve similar technical effects as those in the scenarios between terminals and the base stations. Further, although the original intention of the present application is for scenarios between terminals and base stations, the present application is also applicable to a communication scenario of IAB (Integrated Access and Backhaul) to achieve similar technical effects as those in the scenarios between terminals and the base stations. Further, although the original intention of the present application is for scenarios of terrestrial networks, the present application is also applicable to communication scenarios of non-terrestrial networks (NTNs) to achieve similar technical effects as those in the scenario of the TNs. In addition, the use of a unified solution for different scenarios also helps to reduce hardware complexity and costs.

As one embodiment, the interpretation of the terminologies in the present application refers to the definition of the specification protocol TS36 series of 3GPP.

As one embodiment, the interpretation of the terminologies in the present application refers to the definition of the specification protocol TS38 series of 3GPP.

As one embodiment, the interpretation of the terminologies in the present application refers to the definition of the specification protocol TS37 series of 3GPP.

As one embodiment, the interpretation of the terminologies in the present application refers to the definition of the specification protocol of IEEE (Institute of Electrical and Electronics Engineers).

It should be noted that, in the absence of conflicts, the embodiments and features in the embodiments of any node of the present application may be applied to any other node. In the absence of conflicts, the embodiments and features in the embodiments of the present application may be arbitrarily combined with each other.

The present application discloses a method used in a first node for wireless communication, characterized by comprising:
operating a first MAC PDU on a first cell;
wherein the first MAC PDU comprises a first MAC subPDU, and the first MAC subPDU comprises a first MAC subheader and a first MAC SDU; and the first MAC SDU comprises at least some bits of a first PDU and at least some bits of a second PDU.

As one embodiment, the operation is reception.

As one embodiment, the operation is transmission.

As one embodiment, the first PDU and the second PDU belong to the same protocol layer.

As one embodiment, the first PDU and the second PDU belong to different radio bearers.

As one embodiment, the problem to be solved by the present application comprises: how a first base station and a second base station cooperate.

As one embodiment, the problem to be solved by the present application comprises: how to shorten the transmission latency of a high-latency network.

As one embodiment, the problem to be solved by the present application comprises: how to transmit a first PDU and a second PDU.

As one embodiment, the characteristics of the above method comprise: the first MAC SDU comprises at least some bits of a first PDU and at least some bits of a second PDU; and the first PDU and the second PDU belong to the same protocol layer.

As one embodiment, the characteristics of the above method comprise: the first MAC SDU comprises at least some bits of a first PDU and at least some bits of a second PDU; and the first PDU and the second PDU belong to different radio bearers.

As one embodiment, the benefit of the above method comprises: two PDUs belonging to different radio bearers are multiplexed at the same MAC SDU, thereby improving the transmission performance.

As one embodiment, the benefit of the above method comprises: the transmission reliability is improved.

As one embodiment, the benefit of the above method comprises: the transmission latency is reduced.

According to one aspect of the present application, the above method is characterized by comprising:
processing a target PDU at a first protocol layer;
wherein the target PDU comprises at least some bits of the first PDU, and the target PDU comprises at least some bits of the second PDU; the first protocol layer is located below an SDAP (Service Data Adaptation Protocol) sublayer, and the first protocol layer is located above an MAC sublayer; and the first MAC PDU carries at least some bits of the target PDU.

According to one aspect of the present application, the above method is characterized by comprising:
processing a target PDU at a first protocol layer;
wherein the target PDU comprises at least some bits of the first PDU; the second PDU comprises at least some bits of the target PDU; a protocol layer to which the first PDU belongs is located above the first protocol layer, and a protocol layer to which the second PDU belongs is located below the first protocol layer; and the first PDU and the second PDU belong to different radio bearers.

According to one aspect of the present application, the above method is characterized in that the second PDU comprises at least some bits in the first PDU; and a protocol layer to which the first PDU belongs is not higher than a protocol layer to which the second PDU belongs.

According to one aspect of the present application, the above method is characterized in that the second PDU does not depend on the first PDU, and the first PDU does not depend on the second PDU.

The present application discloses a method used in a second node for wireless communication, characterized by comprising:
operating a first MAC PDU on a first cell;
wherein the first MAC PDU comprises a first MAC subPDU, and the first MAC subPDU comprises a first MAC subheader and a first MAC SDU; and the first MAC SDU comprises at least some bits of a first PDU and at least some bits of a second PDU.

As one embodiment, the operation is reception.

As one embodiment, the operation is transmission.

As one embodiment, the first PDU and the second PDU belong to the same protocol layer.

As one embodiment, the first PDU and the second PDU belong to different radio bearers.

According to one aspect of the present application, the above method is characterized in that a target PDU is processed at a first protocol layer; the target PDU comprises at least some bits of the first PDU, and the target PDU comprises at least some bits of the second PDU; the first protocol layer is located below an SDAP sublayer, and the first protocol layer is located above an MAC sublayer; and the first MAC PDU carries at least some bits of the target PDU.

According to one aspect of the present application, the above method is characterized in that a target PDU is processed at a first protocol layer; the target PDU comprises at least some bits of the first PDU; the second PDU comprises at least some bits of the target PDU; a protocol layer to which the first PDU belongs is located above the first protocol layer, and a protocol layer to which the second PDU belongs is located below the first protocol layer; and the first PDU and the second PDU belong to different radio bearers.

According to one aspect of the present application, the above method is characterized in that the second PDU comprises at least some bits in the first PDU; and a protocol layer to which the first PDU belongs is not higher than a protocol layer to which the second PDU belongs.

According to one aspect of the present application, the above method is characterized in that the second PDU does not depend on the first PDU, and the first PDU does not depend on the second PDU.

The present application discloses a first node for wireless communication, characterized by comprising:
a first processor for operating a first MAC PDU on a first cell;
wherein the first MAC PDU comprises a first MAC subPDU, and the first MAC subPDU comprises a first MAC subheader and a first MAC SDU; and the first MAC SDU comprises at least some bits of a first PDU and at least some bits of a second PDU.

As one embodiment, the operation is reception.

As one embodiment, the operation is transmission.

As one embodiment, the first PDU and the second PDU belong to the same protocol layer.

As one embodiment, the first PDU and the second PDU belong to different radio bearers.

The present application discloses a second node for wireless communication, characterized by comprising:
a second processor for operating a first MAC PDU on a first cell;
wherein the first MAC PDU comprises a first MAC subPDU, and the first MAC subPDU comprises a first MAC subheader and a first MAC SDU; and the first MAC SDU comprises at least some bits of a first PDU and at least some bits of a second PDU.

As one embodiment, the operation is reception.

As one embodiment, the operation is transmission.

As one embodiment, the first PDU and the second PDU belong to the same protocol layer.

As one embodiment, the first PDU and the second PDU belong to different radio bearers.

As one embodiment, compared with the traditional solution, the present application has the following advantages:
- . improving transmission performance;
- . improving transmission reliability; and
- . reducing transmission latency.

### Brief Description of the Drawings

Other features, purposes and advantages of the present application will become more apparent from reading the detailed description of the non-limiting embodiments made with reference to the following figures:
FIG. 1 shows a flowchart of transmission of a first MAC PDU according to one embodiment of the present application;
FIG. 2 shows a schematic diagram of a network architecture according to one embodiment of the present application;
FIG. 3 shows a schematic diagram of an embodiment of a radio protocol architecture for a user plane and a control plane according to one embodiment of the present application;
FIG. 4 shows a schematic diagram of a first communication device and a second communication device according to one embodiment of the present application;
FIG. 5 shows a flowchart of radio signal transmission according to one embodiment of the present application;
FIG. 6 shows a flowchart of processing a target PDU at a first protocol layer according to one embodiment of the present application;
FIG. 7 shows a flowchart of processing a target PDU at a first protocol layer according to another embodiment of the present application;
FIG. 8 shows a schematic diagram of a second PDU comprising at least some bits in a first PDU according to one embodiment of the present application;
FIG. 9 shows a schematic diagram of a second PDU that does not depend on a first PDU and the first PDU that does not depend on the second PDU according to one embodiment of the present application;
FIG. 10 shows a schematic diagram of a protocol stack according to one embodiment of the present application;
FIG. 11 shows a schematic diagram of a protocol stack according to another embodiment of the present application;
FIG. 12 shows a schematic diagram of a protocol stack according to still another embodiment of the present application;
FIG. 13 shows a schematic diagram of a first MAC SDU according to one embodiment of the present application;
FIG. 14 shows a schematic diagram of a first MAC SDU according to another embodiment of the present application;
FIG. 15 shows a structural block diagram of a processing unit in a first node according to one embodiment of the present application;
FIG. 16 shows a structural block diagram of a processing unit for a second node according to one embodiment of the present application;
FIG. 17 shows a schematic diagram of a protocol stack of a first node terminating at a second node and a third node according to one embodiment of the present application; and
FIG. 18 shows a schematic diagram of a protocol stack of a first node terminating at a second node according to one embodiment of the present application.

### Detailed Description of Embodiments

The technical solution of the present application will be further described in detail below in conjunction with the accompanying drawings. It should be noted that, in the absence of conflicts, the embodiments and features in the embodiments of the present application may be arbitrarily combined with each other.

### Embodiment 1

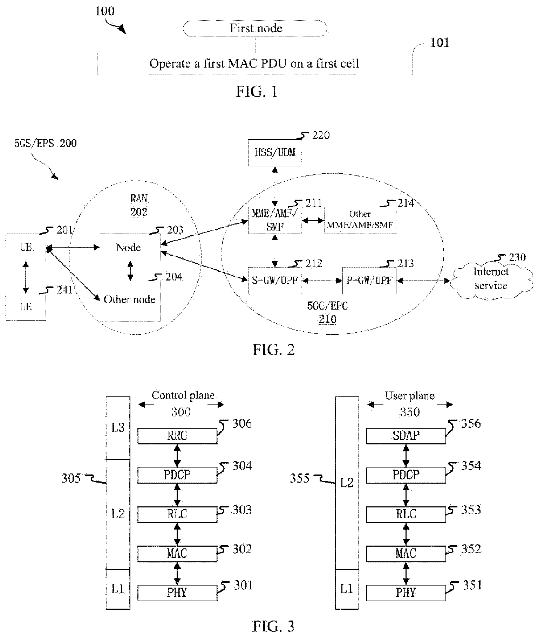

Embodiment 1 illustrates a flowchart of transmission of a first MAC PDU according to one embodiment of the present application, as shown in FIG. 1. In FIG. 1, each block represents one step, and it should be particularly emphasized that the order of the blocks in the figure does not represent the chronological relationship between the steps represented.

In Embodiment 1, a first node in the present application operates a first MAC PDU on a first cell in step 101, wherein the first MAC PDU comprises a first MAC subPDU, and the first MAC subPDU comprises a first MAC subheader and a first MAC SDU; and the first MAC SDU comprises at least some bits of a first PDU and at least some bits of a second PDU.

As one embodiment, the operation is reception.

As one sub-embodiment of this embodiment, the first MAC PDU is received on the first cell of the second node.

As one sub-embodiment of this embodiment, the first MAC PDU is transmitted on a PDSCH (Physical Downlink Shared Channel).

As one sub-embodiment of this embodiment, the first MAC PDU comprises one PDSCH transmission.

As one sub-embodiment of this embodiment, the first MAC PDU is transmitted on a downlink.

As one sub-embodiment of this embodiment, the first MAC PDU is transmitted on a sidelink.

As one sub-embodiment of this embodiment, the first MAC PDU is received from a physical layer.

As one embodiment, the operation is transmission.

As one sub-embodiment of this embodiment, the first MAC PDU is transmitted on the first cell of the second node.

As one sub-embodiment of this embodiment, the first MAC PDU is transmitted on a PUSCH (Physical Uplink Shared Channel).

As one sub-embodiment of this embodiment, the first MAC PDU comprises one PUSCH transmission.

As one sub-embodiment of this embodiment, the first MAC PDU is transmitted on an uplink.

As one sub-embodiment of this embodiment, the first MAC PDU is transmitted on a sidelink.

As one sub-embodiment of this embodiment, the first MAC PDU is transmitted through a physical layer.

As one embodiment, the first cell comprises radio resources of the second node.

As one embodiment, the first cell is maintained by the second node.

As one embodiment, radio resources in the first cell are maintained by the second node.

As one embodiment, radio resources in the first cell are provided by the second node.

As one embodiment, radio resources in the first cell are allocated by the second node.

As one embodiment, the first cell comprises time-frequency resources.

As one embodiment, the first cell comprises an area covered with the second node.

As one embodiment, the first cell is one cell.

As one embodiment, the first cell is one servicing cell.

As one embodiment, the first cell is one servicing cell of the first node.

As one embodiment, the first cell is configured with a PCI (Physical Cell Identifier).

As one embodiment, the first cell is configured with an SSB (SS (Synchronization Signal)/PBCH (Physical Boardcast Channel) block).

As one embodiment, the first cell is configured with radio resources.

As one embodiment, the first cell is configured with one cell identifier.

As one embodiment, the first cell is configured with at least one uplink (UL) carrier.

As one embodiment, the first cell is configured with at least one downlink (DL) carrier.

As one embodiment, the first cell is configured with at least one uplink BWP (Bandwidth Part).

As one embodiment, the first cell is configured with at least one downlink BWP.

As one embodiment, the first cell is configured with a serving cell identifier.

As one embodiment, the first cell is not configured with a serving cell identifier.

As one embodiment, the first cell is not an SpCell (Special Cell) of the first node.

As one embodiment, the first cell is not an SCell (Secondary Cell) of the first node.

As one embodiment, the first cell is an SpCell of the first node.

As one embodiment, the first cell is an SCell of the first node.

As one embodiment, the first MAC PDU is generated at the MAC sublayer.

As one embodiment, the first MAC PDU is received at the MAC sublayer.

As one embodiment, the first MAC PDU is generated at the MAC sublayer.

As one embodiment, the first MAC PDU is a PDU of one MAC sublayer.

As one embodiment, the first MAC PDU is one MAC PDU.

As one embodiment, the first MAC PDU comprises at least one MAC subPDU.

As one embodiment, the first MAC PDU comprises only one MAC subPDU.

As one embodiment, the first MAC PDU comprises a plurality of MAC subPDUs.

As one embodiment, at least one MAC subPDU in the first MAC PDU comprises an MAC CE (Control Element).

As one embodiment, any MAC subPDU in the first MAC PDU does not comprise an MAC CE.

As one embodiment, one MAC subPDU in the first MAC PDU comprises padding bits.

As one embodiment, any MAC subPDU in the first MAC PDU does not comprise padding bits.

As one embodiment, the first MAC PDU comprises at least the first MAC subPDU.

As one embodiment, the first MAC PDU consists of at least one MAC subPDU.

As one embodiment, the first MAC PDU consists of only one MAC subPDU.

As one embodiment, the first MAC PDU consists of a plurality of MAC subPDUs.

As one embodiment, the first MAC PDU consists of the first MAC subPDU.

As one embodiment, the first MAC PDU consists of the first MAC subPDU and padding bits.

As one embodiment, the first MAC subPDU comprises only one MAC subheader.

As one embodiment, the first MAC subPDU comprises a plurality of MAC subheaders.

As one embodiment, the first MAC subPDU consists of the first MAC subheader and the first MAC SDU.

As one embodiment, the first MAC subPDU consists of a plurality of MAC subheaders and the first MAC SDU.

As one embodiment, the first MAC PDU comprises the first MAC subPDU and the second MAC subheader.

As one embodiment, the first MAC PDU consists of the first MAC subPDU and the second MAC subheader.

As one embodiment, the second MAC subheader is located at the highest bit position in the first MAC PDU.

As one embodiment, the second MAC subheader occupies at least the first octet of the first MAC PDU.

As one embodiment, the second MAC subheader is located before the first MAC SDU.

As one embodiment, there is one MAC subPDU between the second MAC subheader and the first MAC subPDU.

As one embodiment, there is at least one MAC subPDU between the second MAC subheader and the first MAC subPDU.

As one embodiment, there is no MAC subPDU between the second MAC subheader and the first MAC subPDU.

As one embodiment, the first MAC SDU follows the last bit of the first MAC subheader.

As one embodiment, the first MAC SDU comprises each bit of the first PDU.

As one embodiment, the first MAC SDU comprises some bits of the first PDU.

As one embodiment, the first MAC SDU comprises one segment of the first PDU.

As one embodiment, the first MAC SDU comprises each bit of the second PDU.

As one embodiment, the first MAC SDU comprises some bits of the second PDU.

As one embodiment, the first MAC SDU comprises one segment of the second PDU.

As one embodiment, the first PDU comprises a first SDU.

As one embodiment, the first PDU comprises a first SDU and a first data header.

As one sub-embodiment of this embodiment, the first PDU consists of the first SDU and the first data header.

As one sub-embodiment of this embodiment, the first PDU comprises at least some bits of the first SDU and the first data header.

As one sub-embodiment of this embodiment, the first PDU consists of at least some bits of the first SDU and the first data header.

As one embodiment, a protocol layer to which the first PDU belongs is one sublayer of L2.

As one embodiment, a protocol layer to which the first PDU belongs refers to a protocol layer to which the first PDU is generated.

As one embodiment, a protocol layer to which the first PDU belongs refers to a protocol layer to which the first PDU is assembled.

As one embodiment, a protocol layer to which the first PDU belongs refers to a protocol layer to which the first PDU is received.

As one embodiment, the second PDU comprises a second SDU.

As one embodiment, the second PDU comprises a second SDU and a second data header.

As one sub-embodiment of this embodiment, the second PDU consists of the second SDU and the second data header.

As one sub-embodiment of this embodiment, the second PDU comprises at least some bits of the second SDU and the second data header.

As one sub-embodiment of this embodiment, the second PDU consists of at least some bits of the second SDU and the second data header.

As one embodiment, a protocol layer to which the second PDU belongs is a sublayer of L2.

As one embodiment, a protocol layer to which the second PDU belongs refers to a protocol layer to which the second PDU is generated.

As one embodiment, a protocol layer to which the second PDU belongs refers to a protocol layer to which the second PDU is assembled.

As one embodiment, a protocol layer to which the second PDU belongs refers to a protocol layer to which the second PDU is received.

As one embodiment, the first PDU and the second PDU belong to the same protocol layer.

As one embodiment, both the first PDU and the second PDU belong to an SDAP sublayer.

As one embodiment, both the first PDU and the second PDU belong to a PDCP sublayer.

As one embodiment, both the first PDU and the second PDU belong to an RLC sublayer.

As one embodiment, both the first PDU and the second PDU belong to a protocol layer between an SDAP sublayer and a PDCP sublayer.

As one embodiment, both the first PDU and the second PDU belong to a protocol layer between a PDCP sublayer and an RLC sublayer.

As one embodiment, both the first PDU and the second PDU belong to a protocol layer between an RLC sublayer and an MAC sublayer.

As one embodiment, the first PDU and the second PDU belong to different protocol layers.

As one embodiment, a protocol layer to which the first PDU belongs is higher than a protocol layer to which the second PDU belongs.

As one embodiment, a protocol layer to which the first PDU belongs is a higher layer than a protocol layer to which the second PDU belongs.

As one embodiment, at least one protocol layer is included between a protocol layer to which the first PDU belongs and a protocol layer to which the second PDU belongs.

As one embodiment, no protocol layer is included a protocol layer to which the first PDU belongs and a protocol layer to which the second PDU belongs.

As one embodiment, a radio bearer is associated with a PDCP entity.

As one embodiment, the radio bearer comprises at least one of a DRB (Data Radio Bearer), an SRB (Signalling Radio Bearer), an MRB (MBS (Multicast/Broadcast Service) Radio Bearer), a multicast MRB, a broadcast MRB, or an SLRB (Sidelink Radio Bearer).

As one embodiment, the first PDU and the second PDU belong to the same radio bearer.

As one embodiment, the first PDU and the second PDU belong to the same DRB.

As one embodiment, the first PDU and the second PDU belong to the same SRB.

As one embodiment, the first PDU and the second PDU belong to the same MRB.

As one embodiment, the first PDU and the second PDU belong to the same multicast MRB.

As one embodiment, the first PDU and the second PDU belong to the same broadcast MRB.

As one embodiment, the first PDU and the second PDU belong to the same SLRB.

As one embodiment, both the first PDU and the second PDU belong to a protocol layer between an SDAP sublayer and a PDCP sublayer.

As one embodiment, both the first PDU and the second PDU belong to a protocol layer between a PDCP sublayer and an RLC sublayer.

As one embodiment, both the first PDU and the second PDU belong to a protocol layer between an RLC sublayer and an MAC sublayer.

As one embodiment, the first PDU and the second PDU belong to different radio bearers.

As one embodiment, the first PDU and the second PDU belong to different DRBs.

As one embodiment, the first PDU and the second PDU belong to different SRBs.

As one embodiment, the first PDU and the second PDU belong to different MRBs.

As one embodiment, the first PDU and the second PDU belong to different multicast MRBs.

As one embodiment, the first PDU and the second PDU belong to different broadcast MRBs.

As one embodiment, the first PDU and the second PDU belong to different SLRBs.

As one embodiment, an identifier of a radio bearer to which the first PDU belongs is inequal to an identifier of a radio bearer to which the second PDU belongs.

As one sub-embodiment of this embodiment, a type of a radio bearer to which the first PDU belongs is the same as a type of a radio bearer to which the second PDU belongs.

As one sub-embodiment of this embodiment, a type of a radio bearer to which the first PDU belongs is different from a type of a radio bearer to which the second PDU belongs.

As one embodiment, a type of a radio bearer to which the first PDU belongs is different from a type of a radio bearer to which the second PDU belongs.

As one sub-embodiment of this embodiment, an identifier of a radio bearer to which the first PDU belongs is equal to an identifier of a radio bearer to which the second PDU belongs.

As one sub-embodiment of this embodiment, an identifier of a radio bearer to which the first PDU belongs is inequal to an identifier of a radio bearer to which the second PDU belongs.

As one embodiment, a radio bearer to which the first PDU belongs terminates at a second node, and a radio bearer to which the second PDU belongs terminates at a third node.

As one embodiment, a radio bearer to which the first PDU belongs terminates between the first node and a second node, and a radio bearer to which the second PDU belongs terminates between the first node and a third node.

As one embodiment, both a radio bearer to which the first PDU belongs and a radio bearer to which the second PDU belongs terminate at a second node.

As one embodiment, the operation is reception; and the first PDU and the second PDU belong to the same protocol layer.

As one embodiment, the operation is transmission; and the first PDU and the second PDU belong to the same protocol layer.

As one embodiment, the operation is reception; and the first PDU and the second PDU belong to different radio bearers.

As one embodiment, the operation is transmission; and the first PDU and the second PDU belong to different radio bearers.

As one embodiment, the first PDU and the second PDU belong to the same protocol layer; and the first PDU and the second PDU belong to different radio bearers.

As one embodiment, the first PDU and the second PDU belong to the same protocol layer; and the first PDU and the second PDU belong to the same radio bearer.

As one embodiment, the first PDU and the second PDU belong to different protocol layers; and the first PDU and the second PDU belong to different radio bearers.

As one embodiment, the first entity is used for processing the first PDU.

As one embodiment, the first entity is a protocol entity of a protocol layer to which the first PDU belongs.

As one embodiment, the first entity is a protocol entity of the first node; and the first node transmits the first MAC PDU on the first cell.

As one embodiment, the first entity is a protocol entity of the second node; and the first node receives the first MAC PDU on the first cell.

As one embodiment, the first entity is a protocol entity of the third node; and the first node receives the first MAC PDU on the first cell.

As one embodiment, the second entity is used for processing the second PDU.

As one embodiment, the second entity is a protocol entity of a protocol layer to which the second PDU belongs.

As one embodiment, the second entity is a protocol entity of the first node; and the first node transmits the first MAC PDU on the first cell.

As one embodiment, the second entity is a protocol entity of the second node; and the first node receives the first MAC PDU on the first cell.

As one embodiment, the second entity is a protocol entity of the third node; and the first node receives the first MAC PDU on the first cell.

As one embodiment, the first MAC entity is used for processing the first MAC PDU.

As one embodiment, the first MAC entity is a protocol entity of a protocol layer to which the first MAC PDU belongs.

As one embodiment, the first MAC entity is a protocol entity of the first node; and the first node transmits the first MAC PDU on the first cell.

As one embodiment, the first MAC entity is a protocol entity of the second node; and the first node receives the first MAC PDU on the first cell.

As one embodiment, the first MAC entity is an MAC entity of a cell group to which the first cell belongs.

As one embodiment, the first MAC entity is an MAC entity of an MCG (Master Cell Group).

As one sub-embodiment of this embodiment, the first cell is a PCell (Primary Cell).

As one sub-embodiment of this embodiment, the first cell is an SCell in an MCG.

As one embodiment, the first MAC entity is an MAC entity of an SCG (Secondary Cell Group).

As one sub-embodiment of this embodiment, the first cell is a PSCell (Primary SCG Cell).

As one sub-embodiment of this embodiment, the first cell is an SCell in an SCG.

As one embodiment, the first PDU is one PDU of a protocol layer to which the first entity belongs.

As one embodiment, the second PDU is one PDU of a protocol layer to which the second entity belongs.

As one embodiment, the first entity, and the second entity are two different protocol entities.

As one embodiment, the first entity, and the second entity belong to the first node.

As one embodiment, the first entity, and the second entity belong to the second node.

As one embodiment, the first entity belongs to the third node and the second entity belongs to the second node.

As one embodiment, the first entity is configured to an NTN and the second entity is configured to a TN.

As one embodiment, the first entity is configured to a Uu interface, and the second entity is configured to a PC5 interface.

As one embodiment, the first entity is configured to a Uu interface, and the second entity is configured to a Uu interface.

As one embodiment, the first entity is configured to a PC5 interface, and the second entity is configured to a PC5 interface.

As one embodiment, the first entity is configured to the third node, and the second entity is configured to the second node.

As one embodiment, the first entity is configured to the third node, and the second entity and the first MAC entity are configured to the second node.

As one embodiment, the first entity is configured to the third node, and the second entity, the target entity and the first MAC entity are configured to the second node.

As one embodiment, the first entity and the target entity are configured to the third node, and the second entity and the first MAC entity are configured to the second node.

As one embodiment, the first entity, the second entity, the target entity and the first MAC entity are configured to the second node.

As one embodiment, each protocol layer comprises at least one protocol entity.

As one embodiment, the protocol entity in the present application comprises hardware.

As one embodiment, the protocol entity in the present application comprises software.

As one embodiment, the protocol entity in the present application comprises a hardware module.

As one embodiment, the protocol entity in the present application comprises a software module.

As one embodiment, the protocol entity in the present application comprises a process.

As one embodiment, processing a PDU comprises: processing the one PDU at a protocol layer to which the PDU belongs.

As one embodiment, processing a PDU comprises: adding the one data header at a protocol layer to which the PDU belongs.

As one embodiment, processing a PDU comprises: removing the one data header at a protocol layer to which the PDU belongs.

As one embodiment, processing a PDU comprises: generating the one PDU at a protocol layer to which the PDU belongs.

As one embodiment, processing a PDU comprises: receiving the one PDU at a protocol layer to which the PDU belongs.

As one embodiment, processing a PDU comprises: transmitting the one PDU at a protocol layer to which the PDU belongs.

As one embodiment, processing a PDU comprises: delivering the one PDU at a protocol layer to which the PDU belongs to a lower layer of a protocol layer to which the PDU belongs.

As one embodiment, processing a PDU comprises: receiving the one PDU from a lower layer of a protocol layer to which the PDU belongs.

### Embodiment 2

Embodiment 2 illustrates a schematic diagram of a network architecture according to one embodiment of the present application, as shown in FIG. 2. FIG. 2 illustrates a network architecture 200 of a 5G NR (New Radio)/LTE (Long-Term Evolution)/LTE-A (Long-Term Evolution Advanced) system. The 5G NR/LTE/LTE-A network architecture 200 may be referred to as a 5GS (5G System)/EPS (Evolved Packet System) 200 or some other suitable terminology. The 5GS/EPS 200 comprises at least one of UE (User Equipment) 201, an RAN (Radio Access Network) 202, a 5GC (5G Core Network)/EPC (Evolved Packet Core) 210, an HSS (Home Subscriber Server)/UDM (Unified Data Management) 220, and an Internet service 230. The 5GS/EPS may be interconnected with other access networks, but these entities/interfaces are not shown for simplicity. As shown, the 5GS/EPS provides packet switching services, but those skilled in the art will readily appreciate that the various concepts presented throughout the present application may be extended to networks that provide circuit switching services or other cellular networks. The RAN comprises a node 203 and other nodes 204. The node 203 provides user and control plane protocol termination towards the UE201. The node 203 may be connected to other nodes 204 via Xn interface (e.g., backhaul)/X2 interface. The node 203 may also be referred to as a base station, a base transceiver station, a radio base station, a radio transceiver, a transceiver function, a basic service set (BSS), an extended service set (ESS), a TRP (Transmit Receive Point), or some other suitable terminology. The node 203 provides an access point to the 5GC/EPC210 for the UE201. Examples of the UE201 comprise a cellular phone, a smart phone, a session initiation protocol (SIP) phone, a laptop computer, a personal digital assistant (PDA), a satellite radio, a non-terrestrial base station communication, a satellite mobile communication, a global positioning system, a multimedia apparatus, a video apparatus, a digital audio player (e.g., an MP3 player), a camera, a game console, a drone, an aircraft, a narrowband Internet of Things device, a machine type communication device, a land vehicle, an automobile, a wearable device, or any other similarly functional apparatuses. Those skilled in the art may also refer to the UE201 as a mobile station, a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other suitable terminology. The node 203 is connected to 5GC/EPC210 via an S1/NG interface. The 5GC/EPC210 comprises an MME (Mobility Management Entity)/AMF (Authentication Management Field)/SMF (Session Management Function) 211, other MME/AMF/SMF214, an S-GW (Service Gateway)/UPF (User Plane Function) 212, and a P-GW (Packet Data Network Gateway)/UPF213. The MME/AMF/SMF211 is a control node that processes a signaling between the UE201 and the 5GC/EPC210. Generally, the MME/AMF/SMF211 provides bearer and connection management. All user IP (Internet Protocal) packets are transmitted through the S-GW/UPF212, and the S-GW/UPF212 is connected to the P-GW/UPF213 by itself. The P-GW provides UE IP address allocation and other functions. The P-GW/UPF213 is connected to the Internet service 230. The Internet service 230 comprises Internet protocol services corresponding to operators, which may specifically comprise the Internet, an intranet, an IMS (IP Multimedia Subsystem), and a packet switching streaming service.

As one embodiment, the UE201 is connected to the node 203 and the node 204 simultaneously.

As one embodiment, a protocol stack of the UE201 terminates at the node 203 and the node 204.

As one embodiment, a protocol stack of the UE201 terminates at the node 203.

As one embodiment, the UE201 corresponds to the first node in the present application.

As one embodiment, the UE201 is one piece of user equipment (UE).

As one embodiment, the node 203 corresponds to the second node in the present application.

As one embodiment, the node 203 is one base station device (BaseStation, BS).

As one embodiment, the node 203 is user equipment.

As one embodiment, the node 203 is one relay.

As one embodiment, the node 203 is a gateway.

As one embodiment, the node 203 supports transmission in a terrestrial network.

As one embodiment, the node 203 supports transmission in a non-terrestrial network.

As one embodiment, the node 203 supports transmission in a network with a large-latency difference.

As one embodiment, the node 204 corresponds to the third node in the present application.

As one embodiment, the node 204 is one base station device.

As one embodiment, the node 204 is user equipment.

As one embodiment, the node 204 is one relay.

As one embodiment, the node 204 is a gateway.

As one embodiment, the node 204 supports transmission in a terrestrial network.

As one embodiment, the node 204 supports transmission in a non-terrestrial network.

As one embodiment, the node 204 supports transmission in a network with a large-latency difference.

As one embodiment, the node 203 is connected to the node 204 via an ideal backhaul.

As one embodiment, the node 203 is connected to the node 204 via a non-ideal backhaul.

As one embodiment, the node 203 and the node 204 provide radio resources for the UE201 simultaneously.

As one actual example, the node 203 and the node 204 do not provide radio resources for the UE201 simultaneously.

As one embodiment, the node 203 and the node 204 are the same node.

As one embodiment, the node 203 and the node 204 are two different nodes.

As one embodiment, the node 203 and the node 204 are of the same type.

As one embodiment, the node 203 and the node 204 are of different types.

As one embodiment, multi-hop transmission is included between the node 203 and the node 204.

As one embodiment, there is direct transmission between the node 203 and the node 204.

As one embodiment, the user equipment supports transmission in a non-terrestrial network (NTN).

As one embodiment, the user equipment supports transmission in a terrestrial network (TN).

As one embodiment, the user equipment supports transmission in a network with a large-latency difference.

As one embodiment, the user equipment supports dual connection (DC) transmission.

As one embodiment, the user equipment comprises a handheld terminal.

As one embodiment, the user equipment comprises a wearable device.

As one embodiment, the user equipment comprises an aircraft.

As one embodiment, the user equipment comprises a vehicle terminal.

As one embodiment, the user equipment comprises a ship.

As one embodiment, the user equipment comprises an Internet of Things terminal.

As one embodiment, the user equipment comprises an industrial Internet of Things terminal.

As one embodiment, the user equipment comprises a device supporting low-latency and high-reliability transmission.

As one embodiment, the user equipment comprises a test device.

As one embodiment, the user equipment comprises a signaling tester.

As one embodiment, the base station device comprises a base transceiver station (BTS).

As one embodiment, the base station device comprises a Node B (NodeB, NB).

As one embodiment, the base station device comprises a gNB.

As one embodiment, the base station device comprises an eNB.

As one embodiment, the base station device comprises an ng-eNB.

As one embodiment, the base station device comprises an en-gNB.

As one embodiment, the base station device comprises a flying platform device.

As one embodiment, the base station device comprises a satellite device.

As one embodiment, the base station device comprises a marco cellular base station.

As one embodiment, the base station device comprises a micro cell base station.

As one embodiment, the base station device comprises a pico cell base station.

As one embodiment, the base station device comprises a Femtocell.

As one embodiment, the base station device comprises a TRP (Transmitter Receiver Point).

As one embodiment, the base station device comprises a CU (Centralized Unit).

As one embodiment, the base station device comprises a DU (Distributed Unit).

As one embodiment, the base station device comprises a test device.

As one embodiment, the base station device comprises a signaling tester.

As one embodiment, the base station device comprises an IAB-node.

As one embodiment, the base station device comprises an IAB-donor.

As one embodiment, the base station device comprises an IAB-donor-CU.

As one embodiment, the base station device comprises an IAB-donor-DU.

As one embodiment, the base station device comprises an IAB-DU.

As one embodiment, the base station device comprises an IAB-MT.

As one embodiment, the relay comprises a relay.

As one embodiment, the relay comprises an L3 relay.

As one embodiment, the relay comprises an L2 relay.

As one embodiment, the relay comprises a router.

As one embodiment, the relay comprises a switch.

As one embodiment, the relay comprises user equipment.

As one embodiment, the relay comprises a base station device.

### Embodiment 3

Embodiment 3 shows a schematic diagram of an embodiment of a radio protocol architecture for a user plane and a control plane according to the present application, as shown in FIG. 3. FIG. 3 is a schematic diagram illustrating an embodiment of a radio protocol architecture for a user plane 350 and a control plane 300. FIG. 3 shows the radio protocol architecture for the control plane 300 using three layers: a Layer 1, a Layer 2, and a Layer 3. The Layer 1 (L1 layer) is the lowest layer and implements various PHY (physical layer) signal processing functions. The L1 layer will be referred to as a PHY301 herein. The layer 2 (L2 layer) 305 is above the PHY301 and comprises an MAC (Medium Access Control) sublayer 302, an RLC (Radio Link Control) sublayer 303, and a PDCP (Packet Data Convergence Protocol) sublayer 304. The PDCP sublayer 304 provides multiplexing between different radio bearers and logical channels. The PDCP sublayer 304 also provides security by encrypting data packets, and provides support for interzone mobility. The RLC sublayer 303 provides segmentation and reassembly of upper-layer data packets, retransmission of lost data packets, and reordering of data packets to compensate for out-of-order reception due to an HARQ (Hybrid Automatic Repeat Request). The MAC sublayer 302 provides multiplexing between logical and transport channels. The MAC sublayer 302 is also responsible for allocating various radio resources (e.g., resource blocks) in a cell. The MAC sublayer 302 is also responsible for HARQ operations. An RRC (Radio Resource Control) sublayer 306 in the Layer 3 (L3 layer) in the control plane 300 is responsible for obtaining radio resources (i.e., radio bearers) and configuring lower layers using an RRC signaling. The radio protocol architecture for the user plane 350 comprises a Layer 1 (L1 layer) and a Layer 2 (L2 layer). The radio protocol architecture in the user plane 350 is substantially the same as the corresponding layers and sublayers in the control plane 300 for the physical layer 351, a PDCP sublayer 354 in the L2 layer 355, an RLC sublayer 353 in the L2 layer 355, and an MAC sublayer 352 in the L2 layer 355, but the PDCP sublayer 354 also provides header compression for the upper-layer data packets to reduce radio transmission overhead. The L2 layer 355 in the user plane 350 also comprises an SDAP (Service Data Adaptation Protocol) sublayer 356, and the SDAP sublayer 356 is responsible for mapping between QoS flows and data radio bearers (DRBs) to support the diversity of services.

As one embodiment, the radio protocol architecture in FIG. 3 is applicable to the first node in the present application.

As one embodiment, the radio protocol architecture in FIG. 3 is applicable to the second node in the present application.

As one embodiment, the radio protocol architecture in FIG. 3 is applicable to the third node in the present application.

As one embodiment, the first MAC PDU in the present application is generated at the MAC302 or MAC352.

As one embodiment, the target PDU in the present application is generated at the first protocol layer in the present application.

As one embodiment, the target PDU in the present application is generated at the target entity in the present application.

As one embodiment, the first PDU in the present application is generated at the first entity in the present application.

As one embodiment, the first PDU in the present application is generated at the MAC302 or MAC352.

As one embodiment, the first PDU in the present application is generated at the PHY301 or PHY351.

As one embodiment, the first PDU in the present application is generated at the RRC306.

As one embodiment, the first PDU in the present application is generated at the SDAP356.

As one embodiment, the first PDU in the present application is generated at the PDCP304 or PDCP354.

As one embodiment, the second PDU in the present application is generated at the second entity in the present application.

As one embodiment, the second PDU in the present application is generated at the MAC302 or MAC352.

As one embodiment, the second PDU in the present application is generated at the PHY301 or PHY351.

As one embodiment, the second PDU in the present application is generated at the RRC306.

As one embodiment, the second PDU in the present application is generated at the SDAP356.

As one embodiment, the second PDU in the present application is generated at the PDCP304 or PDCP354.

### Embodiment 4

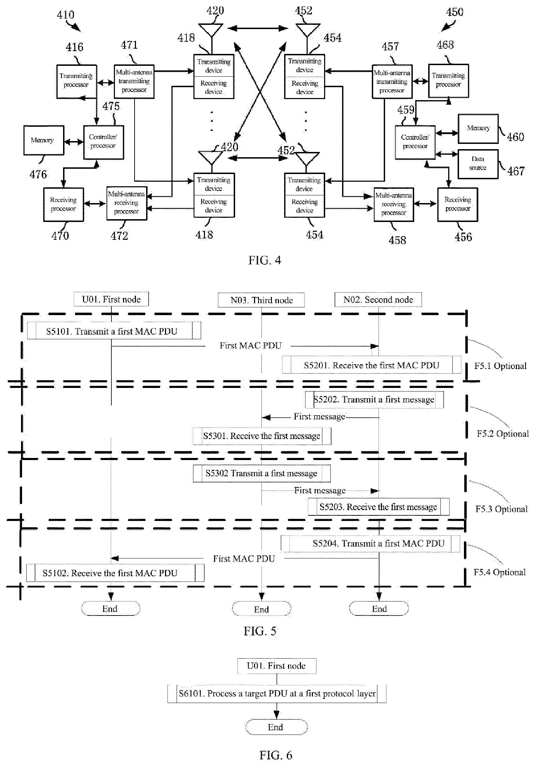

Embodiment 4 shows a schematic diagram of a first communication device and a second communication device according to the present application, as shown in FIG. 4. FIG. 4 is a block diagram of a first communication device 450 and a second communication device 410 communicating with each other in an access network.

The first communication device 450 comprises a controller/processor 459, a memory 460, a data source 467, a transmitting processor 468, a receiving processor 456, a multi-antenna transmitting processor 457, a multi-antenna receiving processor 458, a transmitting device/receiving device 454, and an antenna 452.

The second communication device 410 comprises a controller/processor 475, a memory 476, a receiving processor 470, a transmitting processor 416, a multi-antenna receiving processor 472, a multi-antenna transmitting processor 471, a transmitting device/receiving device 418, and an antenna 420.

In transmission from the second communication device 410 to the first communication device 450, at the second communication device 410, upper-layer data packets from a core network are provided to the controller/processor 475. The controller/processor 475 implements the functionality of the L2 layer. In the transmission from the second communication device 410 to the first communication device 450, the controller/processor 475 provides header compression, encryption, packet segmentation and reordering, multiplexing between logical and transport channels, and radio resource allocation to the first communication device 450 based on various priority metrics. The controller/processor 475 is also responsible for retransmission of lost packets and signaling to the first communication device 450. The transmitting processor 416 and the multi-antenna transmitting processor 471 implement various signal processing functions for the L1 layer (i.e., physical layer). The transmitting processor 416 implements encoding and interleaving to facilitate forward error correction (FEC) at the second communication device 410, as well as mapping of signal constellations based on various modulation schemes (e.g., binary phase shift keying (BPSK), quadrature phase shift keying (QPSK), M-phase shift keying (M-PSK), and M-quadrature amplitude modulation (M-QAM)). The multi-antenna transmitting processor 471 performs digital spatial precoding, comprising codebook-based precoding and non-codebook-based precoding, and beamforming processing on the encoded and modulated symbols to generate one or more spatial streams. The transmitting processor 416 then maps each spatial stream to a subcarrier, multiplexes the each spatial stream with a reference signal (e.g., pilot frequency) in the time domain and/or frequency domain, and then uses an inverse fast Fourier transform (IFFT) to produce a physical channel carrying a time-domain multi-carrier symbol stream. The multi-antenna transmitting processor 471 then performs a transmitting analog precoding/beamforming operation on the time-domain multi-carrier symbol stream. Each transmitting device 418 converts a baseband multi-carrier symbol stream provided by the multi-antenna transmitting processor 471 into a radio frequency stream, and then provides the radio frequency stream to different antennas 420.

In the transmission from the second communication device 410 to the first communication device 450, at the first communication device 450, each receiving device 454 receives a signal through a corresponding antenna 452 thereof. Each receiving device 454 recovers information modulated onto a radio frequency carrier, and converts the radio frequency stream into a baseband multi-carrier symbol stream and provides the baseband multi-carrier symbol stream to the receiving processor 456. The receiving processor 456 and the multi-antenna receiving processor 458 implement various signal processing functions of the L1 layer. The multi-antenna receiving processor 458 performs a receiving analog precoding/beamforming operation on the baseband multi-carrier symbol stream from the receiving device 454. The receiving processor 456 uses a fast Fourier transform (FFT) to convert the baseband multi-carrier symbol stream from the time domain to the frequency domain after the receiving analog precoding/beamforming operation. In the frequency domain, the physical layer data signal and the reference signal are demultiplexed by the receiving processor 456, wherein the reference signal will be used for channel estimation, and the data signal is recovered after multi-antenna detection in the multi-antenna receiving processor 458 to recover any spatial stream destined for the first communication device 450. The symbols on each spatial stream are demodulated and recovered in the receiving processor 456, and soft decisions are generated. The receiving processor 456 then decodes and deinterleaves the soft decisions to recover upper-layer data and control signals transmitted by the second communication device 410 on the physical channel. The upper-layer data and the control signals are then provided to the controller/processor 459. The controller/processor 459 implements the functions of the L2 layer. The controller/processor 459 may be associated with the memory 460 which stores program codes and data. The memory 460 may be referred to as a computer-readable medium. In the transmission from the second communication device 410 to the second communication device 450, the controller/processor 459 provides demultiplexing between transport and logical channels, packet reassembly, decryption, header decompression, and control signal processing to recover the upper-layer data packets from the core network. The upper-layer data packets are then provided to all protocol layers above the L2 layer. Various control signals may also be provided to L3 for L3 processing.

In transmission from the first communication device 450 to the second communication device 410, at the first communication device 450, the upper-layer data packets are provided to the controller/processor 459 using the data source 467. The data source 467 represents all protocol layers above the L2 layer. Similar to the transmission function at the second communication device 410 described in the transmission from the second communication device 410 to the first communication device 450, the controller/processor 459 implements header compression, encryption, packet segmentation and reordering, and multiplexing between logical and transport channels based on radio resource allocation, and implements the functions of the L2 layer for the user plane and the control plane. The controller/processor 459 is also responsible for retransmission of lost packets and signaling to the second communication device 410. The transmitting processor 468 performs modulation mapping and channel coding processing, and the multi-antenna transmitting processor 457 performs digital multi-antenna spatial precoding, comprising codebook-based precoding and non-codebook-based precoding, and beamforming processing. Then, the transmitting processor 468 modulates the produced spatial stream into a multi-carrier/single-carrier symbol stream, which is provided to different antennas 452 by the transmitting device 454 after analog precoding/beamforming operations in the multi-antenna transmitting processor 457. Each transmitting device 454 first converts the baseband symbol stream provided by the multi-antenna transmitting processor 457 into a radio frequency symbol stream, and then provides the radio frequency symbol stream to the antenna 452.

In the transmission from the first communication device 450 to the second communication device 410, the function at the second communication device 410 is similar to the receiving function at the first communication device 450 described in the transmission from the second communication device 410 to the first communication device 450. Each receiving device 418 receives a radio frequency signal through a corresponding antenna 420 thereof, converts the received radio frequency signal into a baseband signal, and provides the baseband signal to the multi-antenna receiving processor 472 and the receiving processor 470. The receiving processor 470 and the multi-antenna receiving processor 472 jointly implement the functions of the L1 layer. The controller/processor 475 implements the function of the L2 layer. The controller/processor 475 may be associated with the memory 476 which stores program codes and data. The memory 476 may be referred to as a computer-readable medium. In the transmission from the first communication device 450 to the second communication device 410, the controller/processor 475 provides demultiplexing between transport and logical channels, packet reassembly, decryption, header decompression, and control signal processing to recover upper-layer data packets from the UE450. The upper-layer data packets from the controller/processor 475 may be provided to the core network.

As one embodiment, the first communication device 450 comprises: at least one processor and at least one memory, wherein the at least one memory comprises a computer program code; and the at least one memory and the computer program code are configured to be used together with the at least one processor; and the first communication device 450 at least: operates a first MAC PDU on a first cell, wherein the operation is reception, or the operation is transmission; the first MAC PDU comprises a first MAC subPDU, and the first MAC subPDU comprises a first MAC subheader and a first MAC SDU; the first MAC SDU comprises at least some bits of a first PDU and at least some bits of a second PDU; and the first PDU and the second PDU belong to the same protocol layer, or the first PDU and the second PDU belong to different radio bearers.

As one embodiment, the first communication device 450 comprises: a memory storing a computer-readable instruction program, wherein the computer-readable instruction program produces an action when executed by at least one processor, the action comprising: operating a first MAC PDU on a first cell, wherein the operation is reception, or the operation is transmission; the first MAC PDU comprises a first MAC subPDU, and the first MAC subPDU comprises a first MAC subheader and a first MAC SDU; the first MAC SDU comprises at least some bits of a first PDU and at least some bits of a second PDU; and the first PDU and the second PDU belong to the same protocol layer, or the first PDU and the second PDU belong to different radio bearers.

As one embodiment, the second communication device 410 comprises: at least one processor and at least one memory, wherein the at least one memory comprises a computer program code; and the at least one memory and the computer program code are configured to be used together with the at least one processor. The second communication device 410 at least: operates a first MAC PDU on a first cell, wherein the operation is reception, or the operation is transmission; the first MAC PDU comprises a first MAC subPDU, and the first MAC subPDU comprises a first MAC subheader and a first MAC SDU; the first MAC SDU comprises at least some bits of a first PDU and at least some bits of a second PDU; and the first PDU and the second PDU belong to the same protocol layer, or the first PDU and the second PDU belong to different radio bearers.

As one embodiment, the second communication device 410 comprises: a memory storing a computer-readable instruction program, wherein the computer-readable instruction program produces an action when executed by at least one processor, the action comprising: operating a first MAC PDU on a first cell, wherein the operation is reception, or the operation is transmission; the first MAC PDU comprises a first MAC subPDU, and the first MAC subPDU comprises a first MAC subheader and a first MAC SDU; the first MAC SDU comprises at least some bits of a first PDU and at least some bits of a second PDU; and the first PDU and the second PDU belong to the same protocol layer, or the first PDU and the second PDU belong to different radio bearers.

As one embodiment, at least one of the antenna 452, the receiving device 454, the receiving processor 456, and the controller/processor 459 is used for receiving the first MAC PDU.

As one embodiment, at least one of the antenna 420, the transmitting device 418, the transmitting processor 416, and the controller/processor 475 is used for transmitting the first MAC PDU.

As one embodiment, at least one of the antenna 452, the transmitting device 454, the transmitting processor 468, and the controller/processor 459 is used for transmitting the first MAC PDU.

As one embodiment, at least one of the antenna 420, the receiving device 418, the receiving processor 470, and the controller/processor 475 is used for receiving the first MAC PDU.

As one embodiment, the first communication device 450 corresponds to the first node in the present application.

As one embodiment, the second communication device 410 corresponds to the second node in the present application.

As one embodiment, the first communication device 450 is one piece of user equipment.

As one embodiment, the first communication device 450 is one piece of user equipment supporting a large-latency difference.

As one embodiment, the first communication device 450 is one piece of user equipment supporting an NTN.

As one embodiment, the first communication device 450 is one aircraft device.

As one embodiment, the first communication device 450 has a positioning capability.

As one embodiment, the first communication device 450 does not have a positioning capability.

As one embodiment, the first communication device 450 is one piece of user equipment supporting a TN.

As one embodiment, the second communication device 410 is one base station device.

As one embodiment, the second communication device 410 is one base station device supporting a TN.

As one embodiment, the second communication device 410 is one base station device supporting an NTN base station device.

As one embodiment, the second communication device 410 is one base station device supporting a large-latency difference.

As one embodiment, the second communication device 410 is a satellite device.

As one embodiment, the second communication device 410 is a flying platform device.

As one embodiment, the second communication device 410 is one base station device supporting a TN.

As one embodiment, the second communication device 410 is an 802.11 device.

As one embodiment, the second communication device 410 is a gNB/eNB/ng-eNB.

### Embodiment 5

Embodiment 5 illustrates a flowchart of radio signal transmission according to one embodiment of the present application, as shown in FIG. 5. It should be particularly noted that the order in this example does not limit the signal transmission order and implementation order in the present application.

For **a first node U01,** in step S5101, a first MAC PDU is transmitted on a first cell; and in step S5102, the first MAC PDU is received on the first cell.

For **a second node N02,** in step S5201, a first MAC PDU is received; in step S5202, a first message is transmitted; in step S5203, the first message is received; and in step S5204, the first MAC PDU is transmitted.

For **a third node N03,** in step S5301, the first message is received; and in step S5302, the first message is transmitted.

In Embodiment 5, the first MAC PDU comprises a first MAC subPDU, and the first MAC subPDU comprises a first MAC subheader and a first MAC SDU; and the first MAC SDU comprises at least some bits of a first PDU and at least some bits of a second PDU.

As one embodiment, the first PDU and the second PDU belong to the same protocol layer.

As one embodiment, the first PDU and the second PDU belong to different radio bearers.

As one embodiment, the first node U01 is one piece of user equipment.

As one embodiment, the first node U01 is one base station device.

As one embodiment, the first node U01 is a relay device.

As one embodiment, the second node N02 is one base station device.

As one embodiment, the second node N02 is one piece of user equipment.

As one embodiment, the second node N02 is a relay device.

As one embodiment, the third node N03 is one base station device.

As one embodiment, the third node N03 is one piece of user equipment.

As one embodiment, the third node N03 is a relay device.

As one embodiment, the first node U01 and the second node N02 are connected via a Uu interface.

As one embodiment, the first node U01 and the second node N02 are connected via an Xn interface.

As one embodiment, the first node U01 and the second node N02 are connected via an X2 interface.

As one embodiment, the first node U01 and the second node N02 are connected via a PC5 interface.

As one embodiment, the first node U01 and the second node N02 are connected via an air interface.

As one embodiment, the first node U01 and the second node N02 are connected via an NR Uu interface.

Typically, the first node U01 is one piece of user equipment, and the second node N02 is one base station device.

Typically, the first node U01 is one piece of user equipment, and the second node N02 is one piece of user equipment.

Typically, the first node U01 is one piece of user equipment, and the second node N02 is a relay device.

Typically, the first node U01 is one base station device, and the second node N02 is one base station device.

As one embodiment, the first node U01 and the third node N03 are connected via a Uu interface.

As one embodiment, the first node U01 and the third node N03 are connected via an Xn interface.

As one embodiment, the first node U01 and the third node N03 are connected via an X2 interface.

As one embodiment, the first node U01 and the third node N03 are connected via a PC5 interface.

As one embodiment, the first node U01 and the third node N03 are connected via an air interface.

As one embodiment, the first node U01 and the third node N03 are connected via an NR Uu interface.

As one embodiment, the second node N02 and the third node N03 are connected via an NR Uu interface.

As one embodiment, the second node N02 and the third node N03 are connected via a Uu interface.

As one embodiment, the second node N02 and the third node N03 are connected via an Xn interface.

As one embodiment, the second node N02 and the third node N03 are connected via an NG (Next Generation) interface.

As one embodiment, the second node N02 and the third node N03 are connected via an Xn interface and an NG interface.

As one embodiment, the second node N02 and the third node N03 are connected via a wired interface.

As one embodiment, the second node N02 and the third node N03 are connected via a wireless interface.

As one embodiment, multi-hop transmission is included between the second node N02 and the third node N03.

As one embodiment, single-hop transmission is included between the second node N02 and the third node N03.

As one embodiment, backhaul between the second node N02 and the third node N03 is ideal.

As one embodiment, backhaul between the second node N02 and the third node N03 are non-ideal.

As one embodiment, at least one base station device is included between the second node N02 and the third node N03.

As one embodiment, at least one AMF (Access and Mobility Management Function)/UPF (User Plane Function) is included between the second node N02 and the third node N03.

As one embodiment, at least one IAB node is included between the second node N02 and the third node N03.

As one embodiment, at least one user equipment is included between the second node N02 and the third node N03.

As one embodiment, at least one NG-RAN (Radio Access Network) node is included between the second node N02 and the third node N03.

As one embodiment, at least one 5GC (5G Core Network) node is included between the second node N02 and the third node N03.

Typically, the first node U01 is one piece of user equipment, the second node N02 is one base station device, and the third node N03 is a base station device.

Typically, the first node U01 is one piece of user equipment, the second node N02 is one piece of user equipment, and the third node N03 is one base station device.

Typically, the first node U01 is one piece of user equipment, the second node N02 is one relay device, and the third node N03 is one base station device.

Typically, the first node U01 is one piece of user equipment, the second node N02 is one piece of user equipment, and the third node N03 is one piece of user equipment.

Typically, the first node U01 is one base station device, the second node N02 is one base station device, and the third node N03 is one base station device.

Typically, the first node U01 is one piece of user equipment, the second node N02 is one TN base station, and the third node N03 is one NTN base station.

Typically, the RTT between the first node U01 and the second node N02 is less than the RTT between the first node U01 and the third node N03.

As one embodiment, the third node N03 transmits an SIB19 (System Information Block 19) message; and the first node U01 receives the SIB19 message.

As one embodiment, the third node N03 transmits an SIB1 (System Information Block 1) message; and the first node U01 receives the SIB1 message.

As one embodiment, the third node N03 transmits a PBCH (Physical Broadcast Channel) message; and the first node U01 receives the PBCH message.

As one embodiment, the third node N03 transmits an MIB (Master Information Block) message; and the first node U01 receives the MIB message.

As one embodiment, a transmitter of the first message is the second node N02, and a receiver of the first message is the third node N03.

As one embodiment, a transmitter of the first message is the third node N03, and a receiver of the first message is the second node N02.

As one embodiment, the first message is directly transmitted by the second node N02 to the third node N03.

As one embodiment, the first message is indirectly transmitted by the second node N02 to the third node N03.

As one sub-embodiment of this embodiment, at least one base station device is included between the second node N02 and the third node N03.

As one sub-embodiment of this embodiment, a third base station device is included between the second node N02 and the third node N03.

As one sub-embodiment of this embodiment, the first message is directly transmitted by the second node N02 to the third base station, and the third base station directly transmits the first message to the third node N03.

As one embodiment, the first message is directly transmitted by the third node N03 to the second node N02.

As one embodiment, the first message is indirectly transmitted by the third node N03 to the second node N02.

As one sub-embodiment of this embodiment, at least one base station device is included between the second node N02 and the third node N03.

As one sub-embodiment of this embodiment, a third base station device is included between the second node N02 and the third node N03.

As one sub-embodiment of this embodiment, the first message is directly transmitted by the third node N03 to the third base station, and the third base station directly transmits the first message to the second node N02.

As one embodiment, the first message is transmitted via an Xn interface.

As one embodiment, the first message is transmitted via an S1 interface.

As one embodiment, the first message is transmitted via an interface between the second node N02 and the third node N03.

As one embodiment, the first message comprises a physical layer signal.

As one embodiment, the first message comprises an MAC layer signaling.

As one embodiment, the first message comprises an RLC layer signaling.

As one embodiment, the first message comprises a PDCP layer signaling.

As one embodiment, the first message comprises an RRC layer signaling.

As one embodiment, the first message is transmitted through an L3 container.

As one embodiment, the first message is transmitted through an L2 container.

As one embodiment, the first message is transmitted via an inter-protocol interface.

As one embodiment, the first message is transmitted via an interface between a 3GPP protocol and a non-3GPP protocol.

As one embodiment, the first message is used for forwarding useful information carried by the first MAC PDU.

As one embodiment, the first message is used for forwarding useful information carried by the first MAC SDU.

As one embodiment, the first message is used for forwarding only the former of at least some bits of the first PDU and at least some bits of the second PDU.

As one embodiment, the first message is used for forwarding at least some bits of the first PDU and at least some bits of the second PDU.

As one embodiment, the first message comprises information of the third node N03.

As one embodiment, the first message comprises an identifier of the third node N03.

As one embodiment, the first message comprises information of the first node U01.

As one embodiment, the first message comprises an identifier of the first node U01.

As one embodiment, the first message comprises a PDU of the first protocol layer.

As one embodiment, the first message comprises an SDU of the first protocol layer.

As one embodiment, the first message comprises the first PDU.

As one embodiment, the first message is the first PDU.

As one embodiment, the first message comprises an SDU in the first PDU.

As one embodiment, the first message is an SDU in the first PDU.

As one embodiment, the first message comprises at least some bits in the first PDU.

As one embodiment, the first message comprises at least some bits in the target PDU.

As one embodiment, the first message comprises the second PDU.

As one embodiment, the first message is the second PDU.

As one embodiment, the first message comprises an SDU in the second PDU.

As one embodiment, the first message is an SDU in the second PDU.

As one embodiment, the MAC sublayer terminates at the second node.

As one embodiment, each protocol layer below the MAC sublayer terminates at the second node.

As one embodiment, the MAC sublayer and the protocol layer below the MAC sublayer both terminate at the second node.

As one embodiment, each protocol layer above the MAC sublayer terminates at the second node.

As one embodiment, at least one protocol layer above the MAC sublayer terminates at the second node, and at least one protocol layer above the MAC sublayer terminates at the third node.

As one embodiment, each protocol layer above the MAC sublayer terminates at the third node.

As one embodiment, the dotted block F5.1 is optional.

As one embodiment, the dotted block F5.2 is optional.

As one embodiment, the dotted block F5.3 is optional.

As one embodiment, the dotted block F5.4 is optional.

As one embodiment, only one of the dotted block F5.1, and the dotted block F5.4 exists.

As one embodiment, the dotted block F5.1 exists, and the dotted block F5.4 does not exist.

As one sub-embodiment of this embodiment, the first MAC PDU is transmitted on the first cell.

As one sub-embodiment of this embodiment, the first MAC PDU is generated at the MAC sublayer of the first node.

As one sub-embodiment of this embodiment, the first entity belongs to the first node.

As one sub-embodiment of this embodiment, the second entity belongs to the first node.

As one sub-embodiment of this embodiment, the target entity belongs to the first node.

As one sub-embodiment of this embodiment, the first MAC entity belongs to the first node.

As one embodiment, the dotted block F5.1 does not exist, and the dotted block F5.4 exists.

As one sub-embodiment of this embodiment, the first MAC PDU is received on the first cell.

As one sub-embodiment of this embodiment, the first MAC PDU is generated at the MAC sublayer of the second node.

As one sub-embodiment of this embodiment, the first entity belongs to the second node.

As one sub-embodiment of this embodiment, the first entity belongs to the third node.

As one sub-embodiment of this embodiment, the target entity belongs to the second node.

As one sub-embodiment of this embodiment, the target entity belongs to the third node.

As one sub-embodiment of this embodiment, the second entity belongs to the second node.

As one sub-embodiment of this embodiment, the first MAC entity belongs to the second node.

As one embodiment, only one of the dotted block F5.2, and the dotted block F5.3 exists.

As one embodiment, the dotted block F5.2 exists, and the dotted block F5.1 exists.

As one sub-embodiment of this embodiment, the first MAC PDU is transmitted on the first cell, and the first MAC PDU is used for triggering the first message.

As one embodiment, the dotted block F5.3 exists, and the dotted block F5.4 exists.

As one sub-embodiment of this embodiment, the first MAC PDU is received on the first cell, and the first message is used for triggering the first MAC PDU.

As one embodiment, the dotted block F5.2, and the dotted block F5.3 do not exist.

### Embodiment 6

Embodiment 6 illustrates a flowchart of processing a target PDU at a first protocol layer according to one embodiment of the present application, as shown in FIG. 6.

For **the first node U01,** in step S6101, the target PDU is processed at the first protocol layer.

In Embodiment 6, the target PDU comprises at least some bits of the first PDU, and the target PDU comprises at least some bits of the second PDU; and the first MAC PDU carries at least some bits of the target PDU.

As one embodiment, the first protocol layer is used for a control plane and a user plane.

As one embodiment, the first protocol layer is only used for the user plane in the control plane and the user plane.

As one embodiment, an SDU of the first protocol layer supports segements.

As one embodiment, an SDU of the first protocol layer does not support segements.

As one embodiment, the first protocol layer is a routing layer.

As one embodiment, the first protocol layer belongs to a Layer 2 (L2).

As one embodiment, the first protocol layer is a sublayer of a Layer 2 (L2).

As one embodiment, the first protocol layer is located below an SDAP sublayer, and the first protocol layer is located above an MAC sublayer.

As one embodiment, the first protocol layer is not higher than an SDAP sublayer.

As one embodiment, the first protocol layer is not higher than an RRC sublayer.

As one embodiment, the first protocol layer is not any one of an RLC sublayer, a PDCP sublayer, an SDAP sublayer, or an RRC sublayer.

As one embodiment, the first protocol layer is one of an RLC sublayer, a PDCP sublayer, an SDAP sublayer, or an RRC sublayer.

As one embodiment, the first protocol layer is located at L2.

As one embodiment, the first protocol layer is located above an MAC sublayer.

As one embodiment, the first protocol layer terminates at the first node U01 and the second node.

As one embodiment, the first protocol layer terminates at the first node U01 and the third node.

As one embodiment, the first node U01 processes the target PDU at the first protocol layer.

As one embodiment, the second node processes the target PDU at the first protocol layer.

As one embodiment, the third node processes the target PDU at the first protocol layer.

As one embodiment, the target PDU is a PDU of the first protocol layer.

As one embodiment, the target PDU comprises at least some bits of the first PDU and at least some bits of the second PDU.

As one embodiment, the target PDU comprises the first PDU and the second PDU.

As one embodiment, the target PDU comprises a target data header and a target SDU, and the target SDU comprises at least some bits of the first PDU and at least some bits of the second PDU.

As one sub-embodiment of this embodiment, the target PDU consists of the target data header and the target SDU.

As one sub-embodiment of this embodiment, the target data header is a data header of the first protocol layer.

As one sub-embodiment of this embodiment, the target PDU is a PDU of the first protocol layer.

As one sub-embodiment of this embodiment, the target PDU is a subPDU of the first protocol layer.

As one sub-embodiment of this embodiment, the target SDU consists of the first PDU and the second PDU.

As one sub-embodiment of this embodiment, the target SDU consists of at least some bits of the first PDU and at least some bits of the second PDU.

As one sub-embodiment of this embodiment, the target SDU consists of the first PDU and the second PDU.

As one embodiment, the first PDU is a subPDU of the target PDU, and the second PDU is a subPDU of the target PDU.

As one embodiment, a protocol layer above the first protocol layer belongs to a 3GPP protocol, and a protocol layer below the first protocol layer belongs to the 3GPP protocol.

As one embodiment, the first protocol layer is located between a 3GPP protocol layer and a non-3GPP protocol layer.

As one embodiment, a protocol layer above the first protocol layer belongs to a 3GPP protocol, and a protocol layer below the first protocol layer does not belong to the 3GPP protocol.

As one embodiment, a protocol layer above the first protocol layer does not belong to a 3GPP protocol, and a protocol layer below the first protocol layer belongs to the 3GPP protocol.

As one embodiment, the first protocol layer is used for determining the mapping of an RLC sublayer to an MAC sublayer.

As one embodiment, the first protocol layer is used for determining the mapping of a PDCP sublayer to an RLC sublayer.

As one embodiment, the first protocol layer is used for determining the mapping of an SDAP sublayer to a PDCP sublayer.

As one embodiment, the first protocol layer is used for determining the mapping of an RRC sublayer to a PDCP sublayer.

As one embodiment, the first protocol layer is located below an RLC sublayer, and the first protocol layer is located above an MAC sublayer.

As one embodiment, the first protocol layer is located below a PDCP sublayer, and the first protocol layer is located above an RLC sublayer.

As one embodiment, the first protocol layer is located below an SDAP sublayer, and the first protocol layer is located above a PDCP sublayer.

As one embodiment, the first protocol layer is located below an RRC sublayer, and the first protocol layer is located above a PDCP sublayer.

As one embodiment, the first MAC PDU carries some bits of the target PDU.

As one embodiment, the first MAC PDU carries each bit of the target PDU.

As one embodiment, the first MAC subPDU carries at least some bits of the target PDU.

As one embodiment, the first MAC SDU carries at least some bits of the target PDU.

As one embodiment, the first MAC PDU carries at least some bits of the target PDU, which is used for determining that the first MAC SDU comprises at least some bits of a first PDU and at least some bits of a second PDU.

As one embodiment, the target entity is used for processing the target PDU.

As one embodiment, the target entity is a protocol entity of a protocol layer to which the target PDU belongs.

As one embodiment, the target entity is associated with the first MAC entity.

As one embodiment, the target entity is one protocol entity of the first protocol layer.

### Embodiment 7

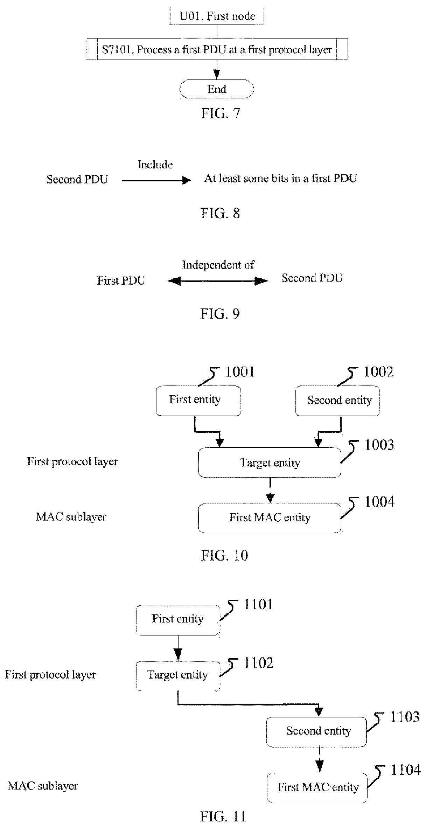

Embodiment 7 illustrates a flowchart of processing a target PDU at a first protocol layer according to another embodiment of the present application, as shown in FIG. 7.

For **a first node U01,** in step S7101, a target PDU is processed at a first protocol layer.

In Embodiment 7, the target PDU comprises at least some bits of the first PDU; the second PDU comprises at least some bits of the target PDU; a protocol layer to which the first PDU belongs is located above the first protocol layer, and a protocol layer to which the second PDU belongs is located below the first protocol layer; and the first PDU and the second PDU belong to different radio bearers.

As one embodiment, the first protocol layer is used for a control plane and a user plane.

As one embodiment, the first protocol layer is only used for a user plane in a control plane and the user plane.

As one embodiment, an SDU of the first protocol layer supports segements.

As one embodiment, an SDU of the first protocol layer does not support segements.

As one embodiment, the first protocol layer is a routing layer.

As one embodiment, the first protocol layer belongs to a Layer 2 (L2).

As one embodiment, the first protocol layer is a sublayer of a Layer 2 (L2).

As one embodiment, the first protocol layer is located below an SDAP sublayer, and the first protocol layer is located above an MAC sublayer.

As one embodiment, the first protocol layer is not higher than an SDAP sublayer.

As one embodiment, the first protocol layer is not higher than an RRC sublayer.

As one embodiment, the first protocol layer is not any one of an RLC sublayer, a PDCP sublayer, an SDAP sublayer, or an RRC sublayer.

As one embodiment, the first protocol layer is one of an RLC sublayer, a PDCP sublayer, an SDAP sublayer, or an RRC sublayer.

As one embodiment, the first protocol layer is located at L2.

As one embodiment, the first protocol layer is located above an MAC sublayer.

As one embodiment, the first protocol layer terminates at the first node U01 and the second node.

As one embodiment, the first protocol layer terminates at the first node U01 and the third node.

As one embodiment, the first MAC PDU carries at least some bits of the target PDU, which is used for determining that the first MAC SDU comprises at least some bits of a first PDU and at least some bits of a second PDU.

As one embodiment, the first PDU is processed at a protocol layer above the first protocol layer, and the second PDU is processed at a protocol layer below the first protocol layer.

As one embodiment, the first PDU is processed at a protocol layer above the first protocol layer, and the second PDU is processed at a protocol layer below the first protocol layer; and the first PDU and the second PDU belong to different radio bearers.

As one embodiment, the target PDU comprises each bit of the first PDU.

As one embodiment, the target PDU comprises some bits of the first PDU.

As one embodiment, the target PDU comprises a segment of the first PDU.

As one embodiment, the target PDU comprises a target data header and a target SDU.

As one embodiment, the target PDU consists of a target data header and a target SDU.

As one embodiment, the target SDU comprises at least some bits of the first PDU.

As one embodiment, the target SDU comprises each bit of the first PDU.

As one embodiment, the target SDU comprises some bits of the first PDU.

As one embodiment, the target SDU comprises a segment of the first PDU.

As one embodiment, the second PDU comprises each bit of the target PDU.

As one embodiment, the second PDU comprises some bits of the target PDU.

As one embodiment, the second PDU comprises a segment of the target PDU.

As one embodiment, the second PDU comprises a second data header and a second SDU.

As one embodiment, the second PDU consists of a second data header and a second SDU.

As one embodiment, the second SDU comprises at least some bits of the target PDU.

As one embodiment, the second SDU comprises each bit of the target PDU.

As one embodiment, the second SDU comprises some bits of the target PDU.

As one embodiment, the second SDU comprises a segment of the target PDU.

As one embodiment, the first PDU is an SDAP PDU, and the second PDU is a PDCP PDU; and the first protocol layer is located between the SDAP sublayer and the PDCP sublayer.

As one embodiment, the first PDU is a PDCP PDU, and the second PDU is an RLC PDU; and the first protocol layer is located between the PDCP sublayer and the RLC sublayer.

As one embodiment, the first PDU is an RRC PDU, and the second PDU is a PDCP PDU; and the first protocol layer is located between the RRC sublayer and the PDCP sublayer.

As one embodiment, the first PDU is an SDAP PDU, and the second PDU is an RLC PDU; and the first protocol layer is a PDCP sublayer.

As one embodiment, the first PDU is an RRC PDU, and the second PDU is an RLC PDU; and the first protocol layer is an RRC sublayer.

As one embodiment, the target entity is used for processing the target PDU.

As one embodiment, the target entity is a protocol entity of a protocol layer to which the target PDU belongs.

As one embodiment, the target entity is a protocol entity of the first protocol layer.

As one embodiment, the target entity is associated with the first MAC entity.

### Embodiment 8

Embodiment 8 illustrates a schematic diagram of a second PDU comprising at least some bits in a first PDU according to one embodiment of the present application, as shown in FIG. 8.

In Embodiment 8, the second PDU comprises at least some bits in the first PDU; and a protocol layer to which the first PDU belongs is not higher than a protocol layer to which the second PDU belongs.

As one embodiment, the second PDU comprises at least some bits of the target PDU and the target PDU comprises at least some bits of the first PDU, which is used for determining that the second PDU comprises at least some bits in the first PDU.

As one embodiment, the target PDU comprises at least some bits of the first PDU, and the target PDU comprises at least some bits of the second PDU; the first protocol layer is located below an SDAP sublayer, and the first protocol layer is located above an MAC sublayer; the first MAC PDU carries at least some bits of the target PDU; and a protocol layer to which the first PDU belongs is not higher than a protocol layer to which the second PDU belongs.

As one embodiment, the second PDU comprises each bit of the first PDU.

As one embodiment, the second PDU comprises some bits of the first PDU.

As one embodiment, the second PDU comprises a segment of the first PDU.

As one embodiment, the second PDU consists of at least some bits in the first PDU and at least one data header.

As one embodiment, the second PDU consists of at least some bits in the first PDU and a data header.

As one embodiment, the second PDU consists of at least some bits in the first PDU and a plurality of data headers.

As one embodiment, the second PDU comprises at least two data headers of the same protocol layer.

As one embodiment, the second PDU comprises two data headers of the same protocol layer.

As one embodiment, the second PDU comprises two PDCP data headers.

As one embodiment, the second PDU comprises two RLC data headers.

As one embodiment, the second PDU comprises a second SDU, and the second SDU comprises at least some bits in the first PDU.

As one sub-embodiment of this embodiment, the second PDU comprises the second SDU and a second data header.

As one sub-embodiment of this embodiment, the second PDU consists of the second SDU and the second data header.

As one sub-embodiment of this embodiment, the second SDU comprises each bit in the first PDU.

As one sub-embodiment of this embodiment, the second SDU comprises some bits in the first PDU.

As one sub-embodiment of this embodiment, the second SDU consists of at least some bits in the first PDU.

As one sub-embodiment of this embodiment, the second SDU consists of the first PDU.

As one sub-embodiment of this embodiment, the first PDU is the second SDU in the second PDU.

As one embodiment, the phrase "a protocol layer to which the first PDU belongs is not higher than a protocol layer to which the second PDU belongs" comprises: the first PDU and the second PDU belong to the same protocol layer.

As one sub-embodiment of this embodiment, a protocol layer to which the first PDU belongs is an SDAP sublayer, and a protocol layer to which the second PDU belongs is the SDAP sublayer.

As one sub-embodiment of this embodiment, a protocol layer to which the first PDU belongs is a PDCP sublayer, and a protocol layer to which the second PDU belongs is the PDCP sublayer.

As one sub-embodiment of this embodiment, a protocol layer to which the first PDU belongs is an RLC sublayer, and a protocol layer to which the second PDU belongs is the RLC sublayer.

As one sub-embodiment of this embodiment, a protocol layer to which the first PDU belongs is the first protocol layer, and a protocol layer to which the second PDU belongs is the first protocol layer.

As one embodiment, the phrase "a protocol layer to which the first PDU belongs is not higher than a protocol layer to which the second PDU belongs" comprises: a protocol layer to which the first PDU belongs is lower than a protocol layer to which the second PDU belongs.

As one sub-embodiment of this embodiment, a protocol layer to which the first PDU belongs is a PDCP sublayer, and a protocol layer to which the second PDU belongs is an SDAP sublayer.

As one sub-embodiment of this embodiment, a protocol layer to which the first PDU belongs is a PDCP sublayer, and a protocol layer to which the second PDU belongs is an RRC sublayer.

As one sub-embodiment of this embodiment, a protocol layer to which the first PDU belongs is an SDAP sublayer, and a protocol layer to which the second PDU belongs is an RRC sublayer.

As one sub-embodiment of this embodiment, a protocol layer to which the first PDU belongs is an RRC sublayer, and a protocol layer to which the second PDU belongs is an SDAP sublayer.

As one sub-embodiment of this embodiment, a protocol layer to which the first PDU belongs is an RLC sublayer, and a protocol layer to which the second PDU belongs is a PDCP sublayer.

As one sub-embodiment of this embodiment, a protocol layer to which the first PDU belongs is an RLC sublayer, and a protocol layer to which the second PDU belongs is an SDAP sublayer.

As one sub-embodiment of this embodiment, a protocol layer to which the first PDU belongs is the first protocol layer, and a protocol layer to which the second PDU belongs is a protocol layer above the first protocol layer.

### Embodiment 9

Embodiment 9 illustrates a schematic diagram of a second PDU that does not depend on a first PDU and the first PDU that does not depend on the second PDU according to one embodiment of the present application, as shown in FIG. 9.

In Embodiment 9, the second PDU does not depend on the first PDU, and the first PDU does not depend on the second PDU.

As one embodiment, the phrase the first PDU does not depend on the second PDU comprises: the first PDU does not comprise the second PDU.

As one embodiment, the phrase the first PDU does not depend on the second PDU comprises: the first PDU is unrelated to the second PDU.

As one embodiment, the phrase the first PDU does not depend on the second PDU comprises: an SDU of any protocol layer in the first PDU is unrelated to the second PDU.

As one embodiment, the phrase the first PDU does not depend on the second PDU comprises: a first SDU in the first PDU is unrelated to the second PDU.

As one embodiment, the phrase the second PDU does not depend on the first PDU comprises: the second PDU does not comprise the first PDU.

As one embodiment, the phrase the second PDU does not depend on the first PDU comprises: the second PDU is unrelated to the first PDU.

As one embodiment, the phrase the second PDU does not depend on the first PDU comprises: an SDU of any protocol layer in the second PDU is unrelated to the first PDU.

As one embodiment, the phrase the second PDU does not depend on the first PDU comprises: a second SDU in the second PDU is unrelated to the first PDU.

### Embodiment 10

Embodiment 10 illustrates a schematic diagram of a protocol stack according to one embodiment of the present application, as shown in FIG. 10. In FIG. 10, block 1001 represents a first entity, block 1002 represents a second entity, block 1003 represents a target entity, and block 1004 represents a first MAC entity.

In Embodiment 10, the first entity is used for processing the first PDU; the second entity is used for processing the second PDU; the target entity is used for processing the target PDU; and the first MAC entity is used for processing the first MAC PDU.

As one embodiment, the target entity receives the first PDU from the first entity.

As one embodiment, the target entity receives the second PDU from the second entity.

As one embodiment, the target entity processes the target PDU.

As one embodiment, the target entity delivers the target PDU to a lower-layer entity of the target entity.

As one embodiment, the target entity generates the target PDU according to the first PDU and the second PDU.

As one embodiment, the target entity generates the target PDU according to an SDU of the first PDU at the first protocol layer and an SDU of the second PDU at the first protocol layer.

As one embodiment, the target entity processes a target PDU at a first protocol layer, the target PDU comprises at least some bits of the first PDU, and the target PDU comprises at least some bits of the second PDU; the first protocol layer is located below an SDAP sublayer, and the first protocol layer is located above an MAC sublayer; and the first MAC PDU carries at least some bits of the target PDU.

As one embodiment, the target entity is not any one of an RLC entity, a PDCP entity, an SDAP entity, or an RRC entity.

As one embodiment, the target entity is one of an RLC entity, a PDCP entity, an SDAP entity, or an RRC entity.

As one embodiment, a protocol layer to which the target entity belongs and a protocol layer below the target entity terminate between the first node and the second node.

As one embodiment, at least one protocol entity is included between the target entity and the first MAC entity.

As one embodiment, no protocol entity is included between the target entity and the first MAC entity.

As one embodiment, the first entity delivers the first PDU to the target entity.

As one embodiment, a protocol layer to which the first entity belongs and a protocol layer above the first entity terminate between the first node and the second node.

As one embodiment, a protocol layer to which the first entity belongs and a protocol layer above the first entity terminate between the first node and the third node.

As one embodiment, the second entity delivers the second PDU to the target entity.

As one embodiment, a protocol layer to which the second entity belongs and a protocol layer above the second entity terminate between the first node and the second node.

As one embodiment, the first entity and the second entity belong to the same protocol layer.

As one embodiment, the first entity and the second entity belong to different protocol layers.

As one embodiment, the first entity and the second entity are respectively an RLC entity; and the first protocol layer is located between an RLC sublayer and an MAC sublayer.

As one embodiment, the first entity and the second entity are respectively a PDCP entity; and the first protocol layer is located between a PDCP sublayer and an RLC sublayer.

As one embodiment, the first entity and the second entity are respectively an SDAP entity; and the first protocol layer is located between an SDAP sublayer and a PDCP sublayer.

As one embodiment, the first entity and the second entity are respectively an RRC entity; and the first protocol layer is located between an RRC sublayer and a PDCP sublayer.

As one embodiment, the first entity and the second entity are respectively a PDCP entity; and the first protocol layer is an RLC sublayer.

As one embodiment, the first entity and the second entity are respectively an SDAP entity; and the first protocol layer is a PDCP sublayer.

As one embodiment, the first entity and the second entity are respectively an RRC entity; and the first protocol layer is a PDCP sublayer.

As one embodiment, at least one protocol layer is included between the first protocol layer and an MAC sublayer.

As one embodiment, no protocol layer is included between the first protocol layer and an MAC sublayer.

### Embodiment 11

Embodiment 11 illustrates a schematic diagram of a protocol stack according to another embodiment of the present application, as shown in FIG. 11. In FIG. 11, block 1101 is a first entity, block 1102 is a target entity, block 1103 is a second entity, and block 1104 is a first MAC entity.

In Embodiment 11, the first entity is used for processing the first PDU; the second entity is used for processing the second PDU; the target entity is used for processing the target PDU; and the first MAC entity is used for processing the first MAC PDU.

As one embodiment, the first entity generates the first PDU.

As one embodiment, the first entity delivers the first PDU to the target entity.

As one embodiment, the second entity generates the second PDU.

As one embodiment, the second entity processes the second PDU.

As one embodiment, the second entity receives the target PDU from the target entity.

As one embodiment, the second entity delivers the second PDU to a lower-layer entity of the second entity.

As one embodiment, a protocol layer to which the second entity belongs and a protocol layer below the second entity terminate between the first node and the second node.

As one embodiment, a protocol layer below the second entity comprises a protocol layer to which the first MAC entity belongs.

As one embodiment, a protocol layer below the second entity comprises an MAC sublayer.

As one embodiment, the target entity receives the first PDU from the first entity.

As one embodiment, the target entity generates the target PDU.

As one embodiment, the target entity processes the target PDU.

As one embodiment, the target entity delivers the target PDU to the second entity.

As one embodiment, the target entity generates the target PDU based on the first PDU.

As one embodiment, the target entity generates the target PDU based on an SDU of the first PDU at the first protocol layer.

As one embodiment, the target entity processes a target PDU; the target PDU comprises at least some bits of the first PDU; the second PDU comprises at least some bits of the target PDU; a protocol layer to which the first PDU belongs is located above the first protocol layer, and a protocol layer to which the second PDU belongs is located below the first protocol layer; and the first PDU and the second PDU belong to different radio bearers.

As one embodiment, a protocol layer to which the target entity belongs and a protocol layer above the target entity terminate between the first node and the second node.

As one embodiment, a protocol layer to which the target entity belongs and a protocol layer above the target entity terminate between the first node and the third node.

As one embodiment, a protocol layer above the target entity comprises a protocol layer to which the first entity belongs.

As one embodiment, the first entity generates the first PDU, and the first entity delivers the first PDU to the target entity; the target entity generates the target PDU, and the target entity delivers the target PDU to the second entity; and the second entity generates the second PDU, and the second entity delivers the second PDU to a lower-layer entity of the second entity.

### Embodiment 12

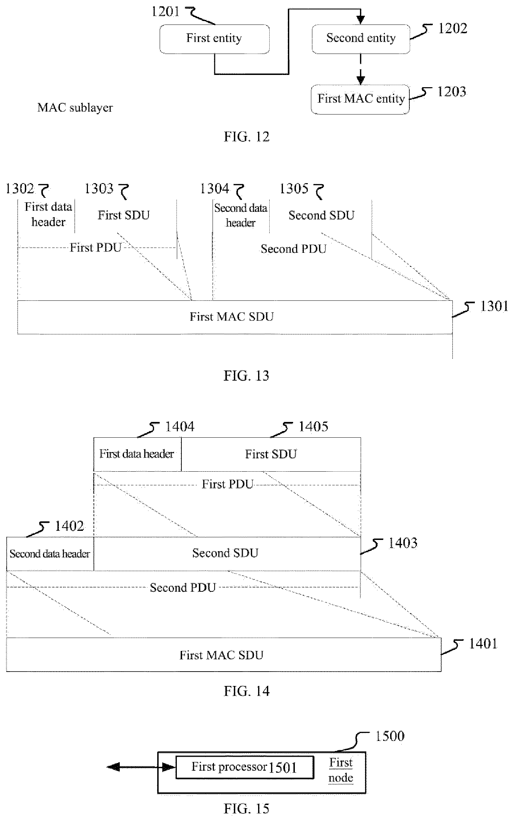

Embodiment 12 illustrates a schematic diagram of a protocol stack according to still another embodiment of the present application, as shown in FIG. 12. In FIG. 12, block 1201 represents a first entity, block 1202 represents a second entity, and block 1203 represents a first MAC entity.

In Embodiment 12, the first entity is used for processing the first PDU; the second entity is used for processing the second PDU; and the first MAC entity is used for processing the first MAC PDU.

As one embodiment, the first entity generates the first PDU.

As one embodiment, the first entity processes the first PDU.

As one embodiment, the first entity delivers the first PDU to the second entity.

As one embodiment, a protocol layer to which the first entity belongs and a protocol layer above the first entity terminate between the first node and the third node.

As one embodiment, a protocol layer to which the first entity belongs and a protocol layer above the first entity terminate between the first node and the second node.

As one embodiment, the second entity generates the second PDU.

As one embodiment, the second entity processes the second PDU.

As one embodiment, the second entity receives the first PDU from the first entity.

As one embodiment, the second entity delivers the second PDU to a lower-layer entity of the second entity.

As one embodiment, a protocol layer below the second entity comprises a protocol layer to which the first MAC entity belongs.

As one embodiment, a protocol layer below the second entity comprises an MAC sublayer.

As one embodiment, the first entity generates the first PDU, and the first entity delivers the first PDU to the second entity; and the second entity generates the second PDU, and the second entity delivers the second PDU to a lower-layer entity of the second entity.

As one embodiment, a protocol layer to which the second entity belongs and a protocol layer below the second entity terminate between the first node and the second node.

As one embodiment, the first entity is an SDAP entity, and the second entity is an SDAP entity.

As one embodiment, the first entity is a PDCP entity, and the second entity is a PDCP entity.

As one embodiment, the first entity is an RLC entity, and the second entity is an RLC entity.

As one embodiment, the first entity is a PDCP entity, and the second entity is an SDAP entity.

As one embodiment, the first entity is a PDCP entity, and the second entity is an RRC entity.

As one embodiment, the first entity is an SDAP entity, and the second entity is an RRC entity.

As one embodiment, the first entity is an RRC entity, and the second entity is an SDAP entity.

As one embodiment, the first entity is an RLC entity, and the second entity is a PDCP entity.

As one embodiment, the first entity is an RLC entity, and the second entity is an SDAP entity.

As one embodiment, the first entity is an RLC entity, and the second entity is an RRC entity.

As one embodiment, the first entity is a protocol entity of the first protocol layer, and the second entity is a protocol entity of the first protocol layer.

As one embodiment, the first entity is a protocol entity of the first protocol layer, and the second entity is a protocol entity above the first protocol layer.

### Embodiment 13

Embodiment 13 illustrates a schematic diagram of a first MAC SDU according to one embodiment of the present application, as shown in FIG. 13. In FIG. 13, block 1301 represents the first MAC SDU, block 1302 represents the first data header, block 1303 represents the first SDU, block 1304 represents the second data header, and block 1305 represents the second SDU.

In Embodiment 13, the first MAC SDU comprises at least some bits of a first PDU and at least some bits of a second PDU.

As one embodiment, the second PDU does not depend on the first PDU, and the first PDU does not depend on the second PDU.

As one embodiment, the formats of the first data header and the second data header are the same.

As one embodiment, the formats of the first data header and the second data header are different.

As one embodiment, a protocol layer to which the first PDU belongs is the same as a protocol layer to which the second PDU belongs.

As one embodiment, a protocol layer to which the first PDU belongs is different from a protocol layer to which the second PDU belongs.

As one embodiment, the first PDU and the second PDU belong to different radio bearers.

### Embodiment 14

Embodiment 14 illustrates a schematic diagram of a first MAC SDU according to another embodiment of the present application, as shown in FIG. 14. In FIG. 14, block 1401 represents the first MAC SDU, block 1402 represents the second data header, block 1403 represents the second SDU, block 1404 represents the first data header, and block 1405 represents the first SDU.

In Embodiment 14, the first MAC SDU comprises at least some bits of the second PDU; the second PDU consists of the second data header and the second SDU; the second SDU comprises at least some bits in the first PDU; and the first PDU consists of the first data header and the first SDU.

As one embodiment, the formats of the first data header and the second data header are the same.

As one embodiment, the formats of the first data header and the second data header are different.

As one embodiment, the first MAC SDU comprises some bits of the second PDU.

As one embodiment, the first MAC SDU comprises each bit of the second PDU.

As one embodiment, the first MAC SDU does not comprise any bit other than the first PDU.

As one embodiment, the first MAC SDU comprises at least one bit other than the first PDU.

As one embodiment, the first MAC SDU comprises at least one data header other than the first PDU.

As one embodiment, the second SDU comprises some bits of the first PDU.

As one embodiment, the second SDU comprises each bit other than the first PDU.

As one embodiment, the second SDU does not comprise any bit other than the first PDU.

As one embodiment, the second SDU comprises at least one bit other than the first PDU.

As one embodiment, the second SDU comprises at least one data header other than the first PDU.

As one embodiment, a protocol layer to which the first PDU belongs is lower than a protocol layer to which the second PDU belongs; and the first PDU and the second PDU belong to different radio bearers.

As one embodiment, a protocol layer to which the first PDU belongs is lower than a protocol layer to which the second PDU belongs; and the first PDU and the second PDU belong to the same radio bearer.

As one embodiment, a protocol layer to which the first PDU belongs is the same as a protocol layer to which the second PDU belongs; and the first PDU and the second PDU belong to different radio bearers.

As one embodiment, a protocol layer to which the first PDU belongs is the same as a protocol layer to which the second PDU belongs; and the first PDU and the second PDU belong to the same radio bearer.

As one embodiment, the second SDU comprises at least some bits of the target PDU; the target PDU comprises at least some bits of the first PDU; a protocol layer to which the first PDU belongs is located above the first protocol layer, and a protocol layer to which the second PDU belongs is located below the first protocol layer; and the first PDU and the second PDU belong to different radio bearers.

### Embodiment 15

Embodiment 15 illustrates a structural block diagram of a processing unit in a first node according to one embodiment of the present application; as shown in FIG. 15. In FIG. 15, the processing unit 1500 in the first node comprises a first processor 1501.

The first processor 1501 operates a first MAC PDU on a first cell;

In Embodiment 15, the first MAC PDU comprises a first MAC subPDU, and the first MAC subPDU comprises a first MAC subheader and a first MAC SDU; and the first MAC SDU comprises at least some bits of a first PDU and at least some bits of a second PDU.

As one embodiment, the operation is reception.

As one embodiment, the operation is transmission.

As one embodiment, the first PDU and the second PDU belong to the same protocol layer.

As one embodiment, the first PDU and the second PDU belong to different radio bearers.

As one embodiment, the first processor 1501 processes a target PDU at a first protocol layer, wherein the target PDU comprises at least some bits of the first PDU, and the target PDU comprises at least some bits of the second PDU; the first protocol layer is located below an SDAP sublayer, and the first protocol layer is located above an MAC sublayer; and the first MAC PDU carries at least some bits of the target PDU.

As one embodiment, the first processor 1501 PDU at the first protocol layer; wherein the target PDU comprises at least some bits of the first PDU; the second PDU comprises at least some bits of the target PDU; the protocol layer to which the first PDU belongs is located above the first protocol layer, and the protocol layer to which the second PDU belongs is located below the first protocol layer; and the first PDU and the second PDU belong to different radio bearers.

As one embodiment, the second PDU comprises at least some bits in the first PDU; and a protocol layer to which the first PDU belongs is not higher than a protocol layer to which the second PDU belongs.

As one embodiment, the second PDU does not depend on the first PDU, and the first PDU does not depend on the second PDU.

As one embodiment, the first processor 1501 comprises at least a first transmitter.

As one embodiment, the first processor 1501 comprises at least a first receiver.

As one embodiment, the first processor 1501 comprises at least a first transmitter and a first receiver.

As one embodiment, the first receiver comprises the antenna 452, the receiving device 454, the multi-antenna receiving processor 458, the receiving processor 456, the controller/processor 459, the memory 460, and the data source 467 in FIG. 4 of the present application.

As one embodiment, the first receiver comprises the antenna 452, the receiving device 454, the multi-antenna receiving processor 458, and the receiving processor 456 in FIG. 4 of the present application.

As one embodiment, the first receiver comprises the antenna 452, the receiving device 454, and the receiving processor 456 in FIG. 4 of the present application.

As one embodiment, the first transmitter comprises the antenna 452, the transmitting device 454, the multi-antenna transmitting processor 457, the transmitting processor 468, the controller/processor 459, the memory 460, and the data source 467 in FIG. 4 of the present application.

As one embodiment, the first transmitter comprises the antenna 452, the transmitting device 454, the multi-antenna transmitting processor 457, and the transmitting processor 468 in FIG. 4 of the present application.

As one embodiment, the first transmitter comprises the antenna 452, the transmitting device 454, and the transmitting processor 468 in FIG. 4 of the present application.

### Embodiment 16

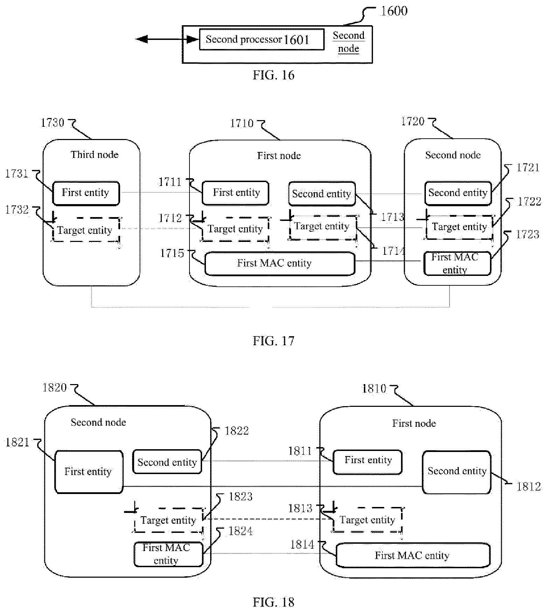

Embodiment 16 illustrates a structural block diagram of a processing unit for a second node according to one embodiment of the present application, as shown in FIG. 16. In FIG. 16, the processing unit 1600 in the second node comprises a second processor 1601.

The second processor 1601 operates a first MAC PDU on a first cell;

In Embodiment 16, the first MAC PDU comprises a first MAC subPDU, and the first MAC subPDU comprises a first MAC subheader and a first MAC SDU; and the first MAC SDU comprises at least some bits of a first PDU and at least some bits of a second PDU.

As one embodiment, the operation is reception.

As one embodiment, the operation is transmission.

As one embodiment, the first PDU and the second PDU belong to the same protocol layer.

As one embodiment, the first PDU and the second PDU belong to different radio bearers.

As one embodiment, the target PDU is processed at a first protocol layer; the target PDU comprises at least some bits of the first PDU, and the target PDU comprises at least some bits of the second PDU; the first protocol layer is located below an SDAP sublayer, and the first protocol layer is located above an MAC sublayer; and the first MAC PDU carries at least some bits of the target PDU.

As one embodiment, the target PDU is processed at a first protocol layer; the target PDU comprises at least some bits of the first PDU; the second PDU comprises at least some bits of the target PDU; a protocol layer to which the first PDU belongs is located above the first protocol layer, and a protocol layer to which the second PDU belongs is located below the first protocol layer; and the first PDU and the second PDU belong to different radio bearers.

As one embodiment, the second PDU comprises at least some bits in the first PDU; and a protocol layer to which the first PDU belongs is not higher than a protocol layer to which the second PDU belongs.

As one embodiment, the second PDU does not depend on the first PDU, and the first PDU does not depend on the second PDU.

As one embodiment, the second processor 1601 comprises at least a second transmitter.

As one embodiment, the second processor 1601 comprises at least a second receiver.

As one embodiment, the second processor 1601 comprises at least a second transmitter and a second receiver.

As one embodiment, the second transmitter comprises the antenna 420, the transmitting device 418, the multi-antenna transmitting processor 471, the transmitting processor 416, the controller/processor 475, and the memory 476 in FIG. 4 of the present application.

As one embodiment, the second transmitter comprises the antenna 420, the transmitting device 418, the multi-antenna transmitting processor 471, and the transmitting processor 416 in FIG. 4 of the present application.

As one embodiment, the second transmitter comprises the antenna 420, the transmitting device 418, and the transmitting processor 416 in FIG. 4 of the present application.

As one embodiment, the second receiver comprises the antenna 420, the receiving device 418, the multi-antenna receiving processor 472, the receiving processor 470, the controller/processor 475, and the memory 476 in FIG. 4 of the present application.

As one embodiment, the second receiver comprises the antenna 420, the receiving device 418, the multi-antenna receiving processor 472, and the receiving processor 470 in FIG. 4 of the present application.

As one embodiment, the second receiver comprises the antenna 420, the receiving device 418, and the receiving processor 470 in FIG. 4 of the present application.

### Embodiment 17

Embodiment 17 illustrates a schematic diagram of a protocol stack of a first node terminating at a second node and a third node according to one embodiment of the present application, as shown in FIG. 17. In FIG. 17, block 1710 represents the first node, block 1720 represents the second node, and block 1730 represents the third node.

As one embodiment, the first node comprises a first entity 1711, a second entity 1713, and a first MAC entity 1715; the second node comprises peer entities of the second entity 1713 and the first MAC entity 1715; and the third node comprises a peer entity of the first entity 1711.

As one embodiment, the first node comprises a first entity 1711, a second entity 1713, a target entity 1714, and a first MAC entity 1715; the second node comprises peer entities of the second entity 1713, the target entity 1714, and the first MAC entity 1715; and the third node comprises a peer entity of the first entity 1711.

As one embodiment, the first node comprises a first entity 1711, a second entity 1713, a target entity 1712, and a first MAC entity 1715, and the second node comprises peer entities of the second entity 1713 and the first MAC entity 1715; and the third node comprises peer entities of the first entity 1711 and the target entity 1712.

As one embodiment, the second node comprises a second entity 1721 and a first MAC entity 1723; the third node comprises a first entity 1731; and the first node comprises peer entities of the first entity 1731, the second entity 1721, and the first MAC entity 1723.

As one embodiment, the second node comprises a second entity 1721, a target entity 1722, and a first MAC entity 1723; the third node comprises a first entity 1731; and the first node comprises peer entities of the first entity 1731, the second entity 1721, the target entity 1722, and the first MAC entity 1723.

As one embodiment, the second node comprises a second entity 1721 and a first MAC entity 1723; the third node comprises a first entity 1731 and a target entity 1732; and the first node comprises peer entities of the first entity 1731, the second entity 1721, the target entity 1732, and the first MAC entity 1723.

As one embodiment, it should be particularly noted that the size and position of each block in this example do not limit the specific implementation of the protocol entity in the present application.

As one embodiment, this embodiment does not limit other protocol layers in the first node, the second node, and the third node.

### Embodiment 18

Embodiment 18 illustrates a schematic diagram of a protocol stack of a first node terminating at a second node according to one embodiment of the present application, as shown in FIG. 18. In FIG. 18, block 1810 represents the first node, and block 1820 represents the second node.

As one embodiment, the first node comprises a first entity 1811, a second entity 1812, and a first MAC entity 1814; and the second node comprises peer entities of the first entity 1811, the second entity 1812, and the first MAC entity 1814.

As one embodiment, the first node comprises a first entity 1811, a second entity 1812, a target entity 1813, and a first MAC entity 1814; and the second node comprises peer entities of the first entity 1811, the second entity 1812, the target entity 1813, and the first MAC entity 1814.

As one embodiment, the second node comprises a first entity 1821, a second entity 1822, and a first MAC entity 1824; and the first node comprises peer entities of the first entity 1821, the second entity 1822, and the first MAC entity 1824.

As one embodiment, the second node comprises a first entity 1821, a second entity 1822, a target entity 1823, and a first MAC entity 1824; and the first node comprises peer entities of the first entity 1821, the second entity 1822, the target entity 1823, and the first MAC entity 1824.

As one embodiment, it should be particularly noted that the size and position of each block in this example do not limit the specific implementation of the protocol entity in the present application.

As one embodiment, this embodiment does not limit other protocol layers in the first node, the second node, and the third node.

Those of ordinary skill in the art can understand that all or part of the steps in the above method may be completed by instructing relevant hardware through a program, and the program may be stored in a computer-readable storage medium, such as a read-only memory, a hard disk or an optical disk. Optionally, all or part of the steps in the above embodiments may also be implemented using one or more integrated circuits. Accordingly, each module unit in the above embodiments may be implemented in the form of hardware or in the form of a software function module, and the present application is not limited to any specific form of software and hardware combination. The user equipment, terminal and UE of the present application comprise, but are not limited to drones, communication modules on drones, remote-controlled aircrafts, aircrafts, small aircrafts, mobile phones, tablet computers, laptops, vehicle-mounted communication devices, radio sensors, Internet cards, Internet of Things terminals, RFID terminals, NB-IOT terminals, MTC (Machine Type Communication) terminals, eMTC (enhanced MTC) terminals, data cards, Internet cards, vehicle-mounted communication devices, low-cost mobile phones, low-cost tablet computers and other wireless communication devices. The base station or system device in the present application comprises, but is not limited to, macro cellular base stations, micro cellular base stations, Femtocells, relay base stations, gNB (NR node B) NR node B, TRPs (Transmitter Receiver Points) and other wireless communication devices.

The above is only a preferred embodiment of the present application and is not used to limit the scope of protection of the present application. Any modifications, equivalent replacements, improvements, etc. made within the spirit and principles of the present application should be included in the scope of protection of the present application.

## Claims

1. A first node for wireless communication, comprising:
a first processor for operating a first MAC PDU on a first cell;
wherein the operation is reception, or the operation is transmission; the first MAC PDU comprises a first MAC subPDU, and the first MAC subPDU comprises a first MAC subheader and a first MAC SDU; the first MAC SDU comprises at least some bits of a first PDU and at least some bits of a second PDU; and the first PDU and the second PDU belong to the same protocol layer, or the first PDU and the second PDU belong to different radio bearers.

2. The first node according to claim 1, comprising:
the first processor for processing a target PDU at a first protocol layer;
wherein the target PDU comprises at least some bits of the first PDU, and the target PDU comprises at least some bits of the second PDU; the first protocol layer is located below an SDAP sublayer, and the first protocol layer is located above an MAC sublayer; and the first MAC PDU carries at least some bits of the target PDU.

3. The first node according to claim 1, comprising:
the first processor for processing a target PDU at a first protocol layer;
wherein the target PDU comprises at least some bits of the first PDU; the second PDU comprises at least some bits of the target PDU; a protocol layer to which the first PDU belongs is located above the first protocol layer, and a protocol layer to which the second PDU belongs is located below the first protocol layer; and the first PDU and the second PDU belong to different radio bearers.

4. The first node according to any one of claims 1 to 3, wherein the second PDU comprises at least some bits in the first PDU; and the protocol layer to which the first PDU belongs is not higher than the protocol layer to which the second PDU belongs.

5. The first node according to any one of claims 1 to 3, wherein the second PDU does not depend on the first PDU, and the first PDU does not depend on the second PDU.

6. A second node for wireless communication, comprising:
a second processor for operating a first MAC PDU on a first cell;
wherein the operation is reception, or the operation is transmission; the first MAC PDU comprises a first MAC subPDU, and the first MAC subPDU comprises a first MAC subheader and a first MAC SDU; the first MAC SDU comprises at least some bits of a first PDU and at least some bits of a second PDU; and the first PDU and the second PDU belong to the same protocol layer, or the first PDU and the second PDU belong to different radio bearers.

7. A method used in a first node for wireless communication, comprising:
operating a first MAC PDU on a first cell;
wherein the operation is reception, or the operation is transmission; the first MAC PDU comprises a first MAC subPDU, and the first MAC subPDU comprises a first MAC subheader and a first MAC SDU; the first MAC SDU comprises at least some bits of a first PDU and at least some bits of a second PDU; and the first PDU and the second PDU belong to the same protocol layer, or the first PDU and the second PDU belong to different radio bearers.

8. A method used in a second node for wireless communication, comprising:
operating a first MAC PDU on a first cell;
wherein the operation is reception, or the operation is transmission; the first MAC PDU comprises a first MAC subPDU, and the first MAC subPDU comprises a first MAC subheader and a first MAC SDU; the first MAC SDU comprises at least some bits of a first PDU and at least some bits of a second PDU; and the first PDU and the second PDU belong to the same protocol layer, or the first PDU and the second PDU belong to different radio bearers.
